# EUROPÄISCHE PATENTANMELDUNG

(11) **EP 2 816 263 A2**
(43) Veröffentlichungstag der Anmeldung: **24.12.2014**
(21) Anmeldenummer: 14173016.8
(22) Anmeldetag: 18.06.2014
(51) Int. Cl.: F16J 15/40

(54) **Dichtungsvorrichtung**

(30) Priorität: 20.06.2013 DE 102013106469
(71) Anmelder: Vrska, Daniel, 6760 Kistelek (HU)
(72) Erfinder: Vrska, Daniel, 6760 Kistelek (HU)
(74) Vertreter: Fritz, Edmund Lothar

(57) **Zusammenfassung**

Die vorliegende Erfindung betrifft eine Vorrichtung umfassend mindestens ein stationäres Gehäusebauteil (3), eine gegenüber dem stationären Gehäusebauteil rotierende Hohlwelle (1) sowie mindestens eine Dichtungsanordnung (2) zur Abdichtung gegen den Eintritt oder Austritt eines Fluids, die in einem Bereich zwischen der rotierenden Hohlwelle und dem stationären Gehäusebauteil angeordnet ist, wobei die Abdichtung mittels eines strömenden Fluids erfolgt und dazu mindestens eine von dem Fluid durchströmte erste Kammer (A) vorgesehen ist, mindestens eine zweite Kammer (B) stromabwärts der ersten Kammer (A) und mindestens eine Engstelle im Strömungsweg zwischen erster und zweiter Kammer, an der das Fluid eine Beschleunigung erfährt, wobei mindestens ein Spalt oder Zwischenraum (E) zwischen der rotierenden Hohlwelle (1) und dem mindestens einen stationären Gehäusebauteil (3) abgedichtet wird, welcher sich im Bereich der Engstelle befindet. Die Erfindung beruht auf dem Lösungsprinzip einer dynamischen Dichtung, bei der keine Reibung auftritt und keine sich berührenden Oberflächen zwischen stationären und rotierenden Elementen vorhanden sind, wobei gleichwohl eine effektive Abdichtung erzielt wird.

## Beschreibung

Die vorliegende Erfindung betrifft eine Vorrichtung umfassend mindestens ein stationäres Gehäusebauteil, eine gegenüber dem stationären Gehäusebauteil rotierende Hohlwelle sowie mindestens eine Dichtungsanordnung zur Abdichtung gegen den Eintritt oder Austritt eines Fluids, die in einem Bereich zwischen der rotierenden Hohlwelle und dem stationären Gehäusebauteil angeordnet ist, wobei die Abdichtung mittels eines strömenden Fluids erfolgt und dazu mindestens eine von dem Fluid durchströmte erste Kammer vorgesehen ist, mindestens eine zweite Kammer stromabwärts der ersten Kammer und mindestens eine Engstelle im Strömungsweg zwischen erster und zweiter Kammer, an der das Fluid eine Beschleunigung erfährt, wobei mindestens ein Spalt oder Zwischenraum zwischen der rotierenden Hohlwelle und dem mindestens einen stationären Gehäusebauteil abgedichtet wird, welcher sich im Bereich der Engstelle befindet.

Grundsätzlich ist die Abdichtung zwischen rotierenden Wellen und drehfesten Bauteilen von Maschinen oft problematisch, wie z.B. bei Pumpen, Kompressoren, Rührern, Turbinen, Gleitringdichtungen und ähnlichen Einrichtungen. Da Teile der Maschinen meist unter Druck stehen oder ein Unterdruck herrscht, müssen offene Zwischenräume zwischen Gehäuseteilen und der rotierenden Welle abgedichtet werden. Es gibt auch Fälle, in denen eine Abdichtung zwischen einer rotierenden Welle und einer stationären Leitung notwendig ist. Abzudichtende offene Zwischenräume zwischen dem Gehäuse einer Maschine und einer rotierenden Welle können beispielsweise so genannte Stopfbuchsen sein. Die hier notwendigen Dichtungen müssen es ermöglichen, dass die Welle rotiert, wobei gleichzeitig der Zwischenraum zwischen der Welle und der Öffnung abgedichtet wird.

In einigen Fällen kann die Abdichtung mittels diverser Arten von Dichtungen erzielt werden, wie zum Beispiel Labyrinthdichtungen, Lippendichtungen, mechanische Dichtungsvorrichtungen, magnetische Kupplungen und dergleichen. Bislang haben sich dabei meist mechanische Dichtungsvorrichtungen als die beste Lösung erwiesen. Hier sind aus dem Stand der Technik verschiedene Bauarten bekannt. Die Bauform der Dichtung ist dabei jeweils an die Arbeitsbedingungen der Maschine mit rotierenden Bauteilen anzupassen, wobei sich durch die transportierten Fluide extreme Bedingungen ergeben können, wie beispielsweise hohe Temperaturen von 400 - 500 °C, extrem niedrige Temperaturen, hohe Drücke oder die Gefahr des Trockenlaufens der Welle. All diese Bedingungen behindern erheblich die Funktionalität der mechanischen Dichtungsvorrichtung und beeinflussen deren Lebensdauer. Daher können diese mechanischen Dichtungsvorrichtungen konstruktiv aufwändig und teuer sein, bei nur begrenzter Lebensdauer.

Die mechanische Dichtung kann außerdem ohne Vorwarnung ausfallen, was zu erheblichen Problemen führen kann, wie z.B. Lecks, durch die Fluide austreten. Derartige Fehlfunktionen können insbesondere dann auftreten, wenn ein Ausfall der Maschine nicht kompensierbar ist. Um die vorgenannten Nachteile zu überwinden, wenden einfachere und zuverlässigere Wege der Abdichtung insbesondere in Stopfbuchsen benötigt.

In der US 2005/0214112 A1 ist eine Dichtungsanordnung für eine Gasturbine beschrieben, bei der ein Rotorblatt innerhalb eines stationären Gehäuses rotiert. Eine Art Grat oder Lamelle am Gehäuse erstreckt sich einwärts in Richtung auf das rotierende Bauteil, wobei in dem Grat ein Schlitz geformt ist, durch den ein Fluidstrom von außen in den Zwischenraum zwischen dem rotierenden Bauteil und dem stationären Gehäuse eintreten kann. Der Druck dieses Fluidstroms kann höher sein als derjenige eines möglichen Leckstroms durch den Spalt zwischen dem rotierenden Bauteil und dem stationären Gehäuse, so dass der von außen durch den Schlitz eintretende Strom einen Leckstrom durch den Spalt vollständig verhindert. Bei geringerem Druck des Fluidstroms durch den Schlitz wird der Leckstrom durch den Spalt zwischen rotierendem und stationärem Bauteil nur verringert.

In der DE 60 2004 001 534 T2 ist eine Ölfilm-Wellendichtung für einen Kreiselverdichter beschrieben, bei der auf einer rotierenden Welle eine Muffe angebracht ist, die sich mit der Welle in einem stationären Gehäuse dreht. Im Gehäuse sind ein Einlass und ein sich in radialer Richtung erstreckender Durchgang zu einem Hohlraum geformt, in den Öl eingeleitet wird, welches dann axial in einem Raum zwischen der Außenfläche der Muffe und der Innenfläche des Gehäuses in beide Richtungen strömt. Zusätzlich wird hier eine mechanische Dichtung aus einem Dichtungsring verwendet, der an seiner Innenfläche eine Beschichtung aus einem sehr harten Material aufweist, um den durch die Rotation der Muffe gegenüber dem Dichtungsring bedingten Verschleiß zu verringern. Hier handelt es sich um eine Kombination aus einer Dichtung mittels eines Ölfilms und einer mechanischen Dichtung mittels Dichtungsrings, der immer noch einem Verschleiß unterliegt, so dass nach längerem Nutzungszeitraum ein Austausch notwendig ist.

In der DE 23 50 931 wird eine Drehwellen-Gleitringdichtung für unter Druck arbeitende Apparate beschrieben, bei der eine Kammer für den Umlauf einer Sperrflüssigkeit in Form eines ringförmigen Kanals zwischen der Welle und dem Gehäuse ausgebildet ist. Die Sperrflüssigkeit gelangt über einen radialen Kanal des Gehäuses in die Kammer und fließt über einen weiteren radialen Kanal wieder aus der Kammer ab. Zur Abdichtung ist hier jedoch eine klassische Gleitringdichtung notwendig mit einem Antifriktionsgleitring, der an der Stirnfläche einer Stufe des Gehäuses anliegt, einem elastischen Ring, der an der Stirnfläche einer ringförmigen Stufe der Welle anliegt und einem zwischen beiden befindlichen Metallring. Diese mechanische Gleitringdichtung unterliegt wiederum einem Verschleiß und hat folglich nur eine begrenzte Lebensdauer.

Die DE 101 03 259 A1 beschreibt eine Anordnung zur Abdichtung der Antriebswellen von Mischerwerkzeugen. Es wird eine Wellendichtung verwendet mit einem die Antriebswelle ringförmig umgebenden metallischen Dichtelement, an dessen Außenfläche eine Dichtlippe anliegt. Auch hier handelt es sich um eine mechanische Dichtung zwischen einem rotierenden Gehäuse und einer mit anderer Geschwindigkeit oder gegenläufig rotierenden Antriebswelle, die einem Verschleiß ausgesetzt ist. Um diese mechanische Dichtung zu kühlen, bildet das Dichtelement einen Ringkanal, dem über Bohrungen Druckluft zugeführt wird.

Die Aufgabe der Erfindung besteht darin, eine Dichtungsvorrichtung der eingangs genannten Gattung zur Verfügung zu stellen, die keine sich berührenden Oberflächen zwischen stationären und rotierenden Elementen aufweist, daher verschleißarm ist und dabei eine effektive Abdichtung bewirkt.

Die Lösung dieser Aufgabe liefert eine Dichtungsvorrichtung der eingangs genannten Gattung mit den kennzeichnenden Merkmalen des Anspruchs 1.

Erfindungsgemäß ist vorgesehen, dass sich die erste Kammer in Strömungsrichtung des Fluids vor der Engstelle im Querschnitt kontinuierlich verjüngt und dass sich die zweite Kammer in Strömungsrichtung des Fluids nach der Engstelle im Querschnitt kontinuierlich erweitert.

Die Abdichtung kann gemäß der vorliegenden Erfindung allein mittels eines strömenden Fluids erfolgen. An mindestens einer Engstelle im Strömungsweg zwischen erster und zweiter Kammer erfährt das Fluid eine Beschleunigung, wobei mindestens ein Spalt oder Zwischenraum zwischen der rotierenden Hohlwelle und dem mindestens einen stationären Gehäusebauteil, welcher sich im Bereich der Engstelle befindet, durch das Fluid selbst abgedichtet wird.

Die Erfindung verlässt die bekannten Lösungswege für derartige Dichtungen. Die Erfindung umfasst das Lösungsprinzip und die Funktionalität einer neuartigen dynamischen Dichtung ebenso wie mögliche Kombinationen der nachfolgend genannten Art. Die neuartige Dichtung hat keine Reibung und es gibt keine sich berührenden Oberflächen zwischen stationären und rotierenden Elementen, wobei gleichwohl eine effektive Abdichtung erzielt wird, die den Austritt eines unter Druck stehenden Fluids oder eines Fluids bei Vakuumbedingungen verhindert.

Es gibt bei der erfindungsgemäßen dynamischen Dichtung keine aufeinander gleitenden Flächen, so dass die Gefahr der Funkenbildung und damit Explosionsgefahr vermieden wird. Es gibt weiterhin keinen Abrieb oder dieser wird minimiert, wodurch die Bruchgefahr sinkt. Dadurch erreicht man eine erhöhte Lebensdauer der Dichtung sowie eine höhere Sicherheit. Bei vorbeugender Wartung der rotierenden Maschinenteile ist die Gefahr, dass die Dichtungsvorrichtung schadhaft wird, minimal.

Die erfindungsgemäße Dichtungsanordnung kann eingesetzt werden bei Maschinen mit rotierenden Bauteilen jeglicher Art, welche Fluide transportieren, d.h. Flüssigkeiten, Luft, Dampf, oder Gase, was in der nachfolgenden Beschreibung mit dem Begriff "Fluide" zusammengefasst wird. Die Abdichtung wird erfindungsgemäß im Prinzip über das Fluid selbst erreicht, welches durch einen Teil der Vorrichtung strömt.

Da sich die erste Kammer in Strömungsrichtung des Fluids vor der Engstelle im Querschnitt verjüngt und sich die zweite Kammer in Strömungsrichtung des Fluids nach der Engstelle im Querschnitt erweitert, tritt die größte Beschleunigung des Fluids im Bereich der Engstelle auf, so dass das strömende Fluid den dort vorhandenen Spalt abdichtet.

Eine von verschiedenen möglichen Varianten der Erfindung sieht vor, dass sich an die Engstelle stromabwärts, vorzugsweise stromabwärts an die zweite Kammer, eine dritte Kammer anschließt, in der eine Richtungsumkehr des Fluids erfolgt, so dass dieses im Gegenstrom zur Richtung des Stroms in der zweiten Kammer aus der Anordnung ausströmt. Das Fluid kann aber auch nur in einer Richtung durch die Dichtungsvorrichtung strömen, oder aber es sind voneinander unabhängige Leitungs- oder Hohlraumsysteme vorhanden, über die das Fluid einströmt bzw. ausströmt. Im letztgenannten Fall kann beispielsweise innerhalb der Hohlwelle konzentrisch zu dieser, sich in axialer Richtung erstreckend, eine Rohrleitung angeordnet sein, durch die ein Fluid strömt, wobei das Fluid durch die Rohrleitung bevorzugt im Gegenstrom zu der Fluidströmung durch die Hohlwelle strömt.

Gemäß einer bevorzugten Weiterbildung der erfindungsgemäßen Aufgabenlösung ist weiterhin vorgesehen, dass die dynamische Abdichtung mittels eines strömenden Fluids mit einer Labyrinthdichtung kombiniert wird, welche im Bereich des Spalts oder Zwischenraums (E) angeordnet ist. Alternativ kann beispielsweise auch mit einer Membrandichtung kombiniert werden. Diese ergänzenden Dichtungselemente dienen insbesondere dazu, das System nach außen hin abzudichten, wenn der Fluidstrom abbrechen sollte, beispielsweise bei Auftreten einer Betriebsstörung.

Das Fluid, dass in die erste Kammer einströmt kann beispielsweise über mindestens eine Öffnung oder einen Kanal im Bereich des abzudichtenden Spalts oder Zwischenraums mindestens abschnittsweise in radialer Richtung oder in einem spitzen Winkel zur Strömungsrichtung in die erste und danach in die zweite Kammer von außerhalb der Hohlwelle einströmen.

Der Querschnitt der ersten Kammer kann sich beispielsweise konisch zur Engstelle hin verjüngen und der Querschnitt der zweiten Kammer kann sich im Anschluss an die Engstelle beispielsweise konisch erweitern, aber der innere Querschnitt der Hohlwelle im Bereich der Engstelle und der Dichtungsanordnung zwischen den beiden Kammern kann auch beispielsweise über eine axiale Strecke gleichbleibend ausgebildet sein.

Eine mögliche bevorzugte Ausführungsvariante der Erfindung sieht vor, dass innerhalb der Hohlwelle konzentrisch zu dieser, sich in axialer Richtung erstreckend, eine (weitere) Rohrleitung angeordnet ist, durch die ein Fluid strömt, wobei das Fluid durch diese Rohrleitung bevorzugt im Gegenstrom zu der Fluidströmung durch die Hohlwelle strömt.

Gemäß einer bevorzugten Weiterbildung der Erfindung kann auch beispielsweise zur Abdichtung des mindestens einen Spalts oder Zwischenraums zwischen der rotierenden Hohlwelle und dem mindestens einen stationären Gehäusebauteil weiterhin mindestens eine Membrandichtung vorgesehen sein, welche vorzugsweise von den Kammern aus gesehen radial außen in dem Spalt oder Zwischenraum abdichtet.

Eine vorteilhafte Ausführungsvariante der Erfindung sieht vor, dass beispielsweise mindestens ein Teilabschnitt der Hohlwelle aus einem elastischen Material besteht. Bei dieser Variante kann sich bei einem höheren Relativdruck des Fluids im Inneren der Hohlwelle durch eine Verformung des elastischen Materials dieses Teilabschnitts der Spalt von sich aus schließen. Wenn man also beispielsweise bei dieser Variante ein Ventil schließt, die Zufuhr des Fluids stoppt und die Maschine unter Druck steht, schließt sich der Spalt selbsttätig durch die Verformung des Materials und kein Fluid kann austreten.

Gemäß einer bevorzugten Weiterbildung der erfindungsgemäßen Lösung kann das Fluid beispielsweise über einen im wesentlichen radialen Zugang in das stationäre Gehäusebauteil eintreten und danach in eine im wesentlichen axiale Strömung durch die Kammern und und/oder durch die Hohlwelle umgelenkt werden.

Weiterhin kann das Fluid beispielsweise nach Durchströmen der Kammern und/oder der Hohlwelle und/oder einer weiteren Rohrleitung durch einen im wesentlichen radialen Ausgang aus dem stationären Gehäusebauteil austreten.

Die erste Kammer kann sich direkt in dem stationären Gehäusebauteil befinden, aber der Bereich, in dem sich die erste Kammer befindet, kann auch beispielsweise ein zu dem stationären Gehäusebauteil separates Bauteil sein, welches über eine Schraubverbindung mit dem Gehäusebauteil verbunden ist.

Das stationäre Gehäusebauteil der Drehverbindung kann gemäß einer bevorzugten Weiterbildung der Erfindung mittelbar oder unmittelbar über bevorzugt spinnenartige Auslegerarme mit einem Lagergehäuse einer Maschine verbunden sein.

Die Hohlwelle kann über ein eigenes Lager drehbar gelagert sein, aber das stationäre Gehäusebauteil der Drehverbindung kann auch beispielsweise mittelbar oder unmittelbar über bevorzugt spinnenartige Auslegerarme mit einem Lagergehäuse einer Maschine verbunden sein, über das dann auch die Hohlwelle gelagert werden kann.

Eine bevorzugte Weiterbildung der Erfindung sieht vor, dass an die Rohrleitung endseitig eine Pumpvorrichtung angeschlossen ist, über welche ein Fluid in die Rohrleitung angesaugt und über diese abgeführt wird. Man kann also die vorliegende Erfindung zum Beispiel bei Pumpen mit rotierenden Bauteilen anwenden. In Betracht kommt dabei insbesondere eine Pumpvorrichtung, die als Treibmittelpumpe ausgebildet ist, wobei vorzugsweise ein Fluid, welches durch die Hohlwelle strömt, als Treibmittel dient. Der Aufbau einer solchen dynamischen Pumpe kann dabei ähnlich sein wie derjenige der zuvor beschriebenen dynamischen Dichtungsvorrichtung. Pumpvorrichtung und erfindungsgemäße Dichtungsvorrichtung können vorteilhaft in einem System miteinander kombiniert werden.

Eine bevorzugte Weiterbildung der Erfindung sieht vor, dass beispielsweise der Spalt oder Zwischenraum für einen Teilstrom des Fluids durchlässig ist, wobei gegebenenfalls stromabwärts des Spalts ein Lager angeordnet ist, welches der Teilstrom des Fluids durchströmt, wobei wiederum stromabwärts zu dem Spalt und/oder zu dem Lager sich wenigstens eine Rohrleitung anschließt, die zu einer weiteren Kammer führt, die im Bereich einer weiteren Engstelle (M) zwischen zwei Kammern angeordnet ist, zwischen denen ein primärer Fluidstrom eine Beschleunigung erfährt, so dass sich der Teilstrom des Fluids mit dem primären Fluidstrom vermischt, wobei die weitere Kammer stromabwärts über Kanäle, Leitungen und/oder weitere Kammern in Strömungsverbindung steht mit dem Inneren der Hohlwelle, so dass der vereinigte Fluidstrom in die Hohlwelle in den Bereich der dynamischen Dichtung, in dem sich der Spalt befindet, zurückführbar ist.

Eine andere bevorzugte Weiterbildung der Erfindung sieht vor, dass beispielsweise konzentrisch in der Hohlwelle eine Rohrleitung aufgenommen ist, welche wiederum konzentrisch eine weitere Rohrleitung aufnimmt, wobei das Innere der Hohlwelle mit dem Inneren der Rohrleitung in Fluidverbindung steht und wobei in der Rohrleitung zwischen zwei Kammern wenigstens eine weitere Engstelle angeordnet ist, an der das Fluid eine Beschleunigung erfährt, wobei gegebenenfalls das Innere der Hohlwelle und das Innere der Rohrleitung stromaufwärts jeweils separate Einlässe für Fluide aufweisen, die unter unterschiedlichen Drücken stehen.

Eine andere bevorzugte Weiterbildung der Erfindung sieht vor, dass beispielsweise in der konzentrisch innerhalb der Hohlwelle liegenden Rohrleitung zwischen zwei Kammern wenigstens eine weitere Engstelle angeordnet ist, an der das Fluid eine Beschleunigung erfährt und ein Spalt nach außen hin abgedichtet wird, wobei dort gegebenenfalls austretendes Fluid über Öffnungen im Gehäuse und Leitungen zu der ersten Kammer und der Engstelle im Bereich des Spalts zwischen Hohlwelle und Gehäuse zurückführbar ist.

Eine andere bevorzugte Weiterbildung der Erfindung sieht vor, dass sich beispielsweise der innere Querschnitt der Hohlwelle stromabwärts der im Querschnitt erweiterten zweiten Kammer wieder verjüngt, wobei sich vorzugsweise stromabwärts an diese Verjüngung wieder ein Abschnitt der Hohlwelle mit gleichbleibendem Querschnitt anschließt.

Eine andere bevorzugte Weiterbildung der Erfindung sieht vor, dass beispielsweise die Hohlwelle aus einem Werkstoff mit geringem Gewicht, insbesondere aus Leichtmetall oder Zinn besteht oder mindestens abschnittsweise aus einem hohlen Material besteht. In diesem Fall ist die Hohlwelle sehr leicht und benötigt daher keine eigenen Lager, denn das Fluid in der Kammer zentriert dann von sich aus die schwimmende Hohlwelle.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch vereinfachte Schnittansicht einer Dichtungsvorrichtung gemäß einer ersten beispielhaften Ausführungsvariante der vorliegenden Erfindung;
Figur 2 eine schematisch vereinfachte Schnittansicht einer Dichtungsvorrichtung gemäß einer zweiten beispielhaften Ausführungsvariante der vorliegenden Erfindung;

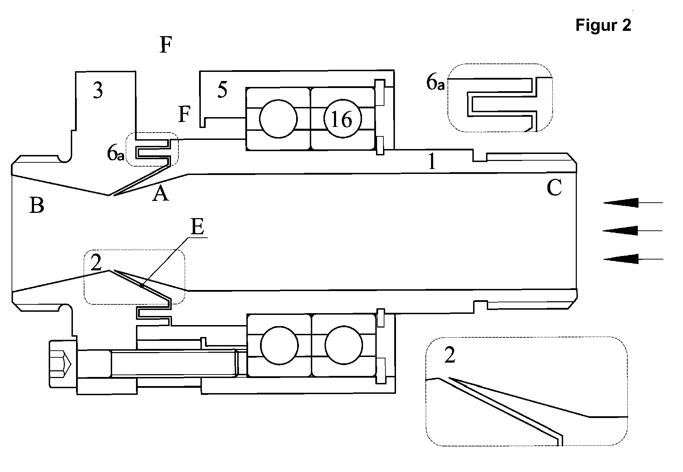

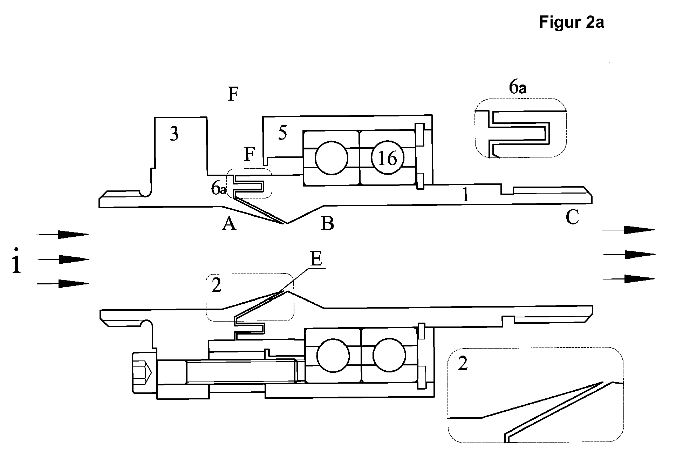

Figur 2 a eine schematisch vereinfachte Schnittansicht einer Dichtungsvorrichtung gemäß einer etwas gegenüber Figur 2 abgewandelten Variante;

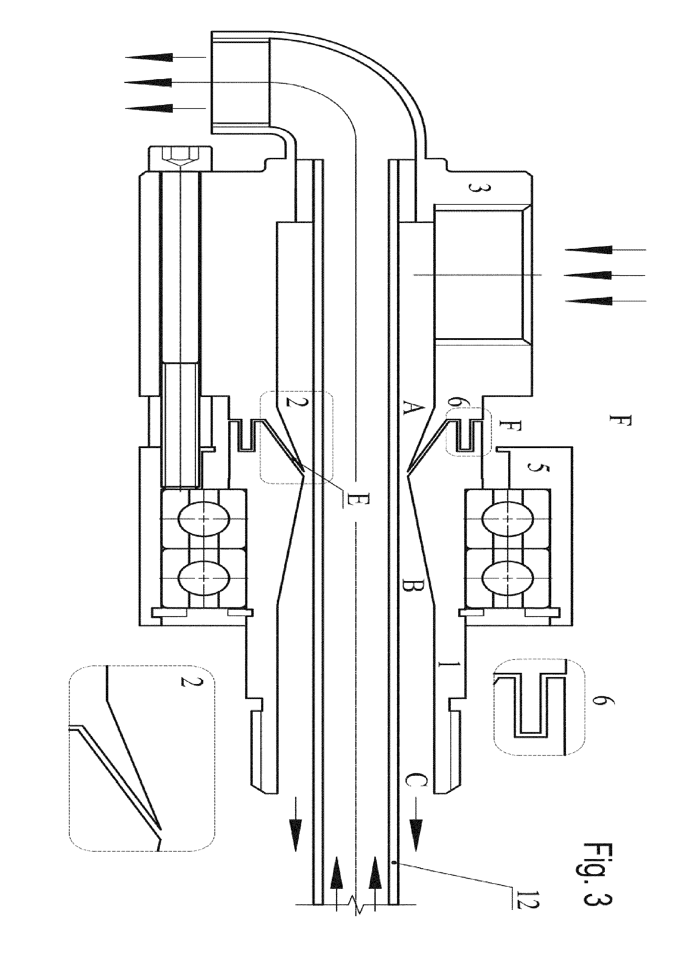

Figur 3 eine schematisch vereinfachte Längsschnittdarstellung einer Drehgelenkverbindung gemäß einer weiteren beispielhaften Variante der vorliegenden Erfindung;

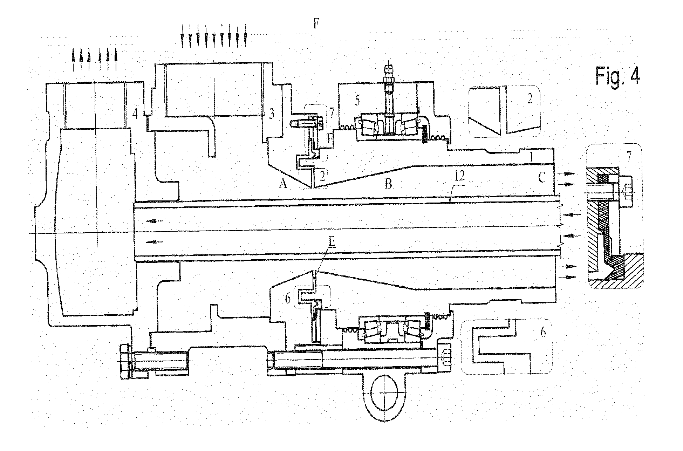

Figur 4 eine schematisch vereinfachte Längsschnittdarstellung einer Drehgelenkverbindung gemäß einer weiteren beispielhaften Variante der vorliegenden Erfindung;

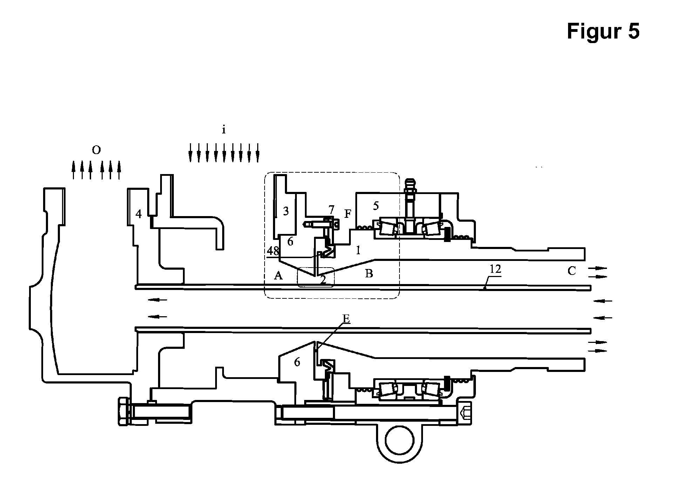

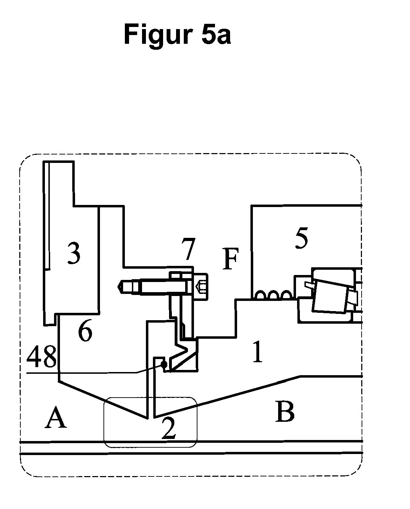

Figur 5 eine schematisch vereinfachte Längsschnittdarstellung einer Drehgelenkverbindung gemäß einer weiteren beispielhaften Variante der vorliegenden Erfindung;
Figur 5 a eine vergrößerte Detailansicht eines Ausschnitts aus Figur 5.

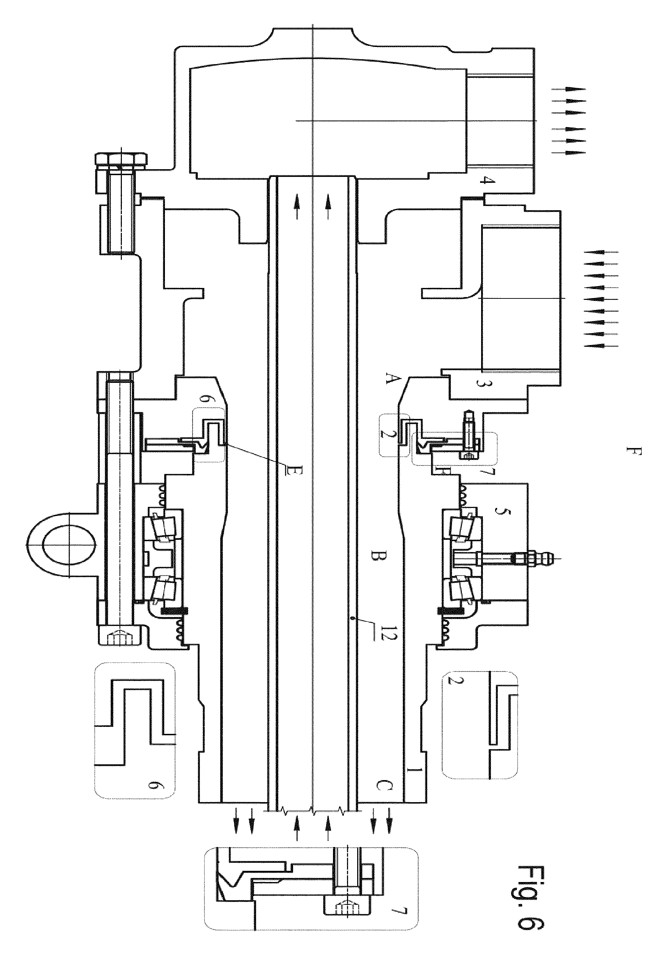

Figur 6 eine schematisch vereinfachte Längsschnittdarstellung einer Drehgelenkverbindung gemäß einer weiteren beispielhaften Variante der vorliegenden Erfindung;

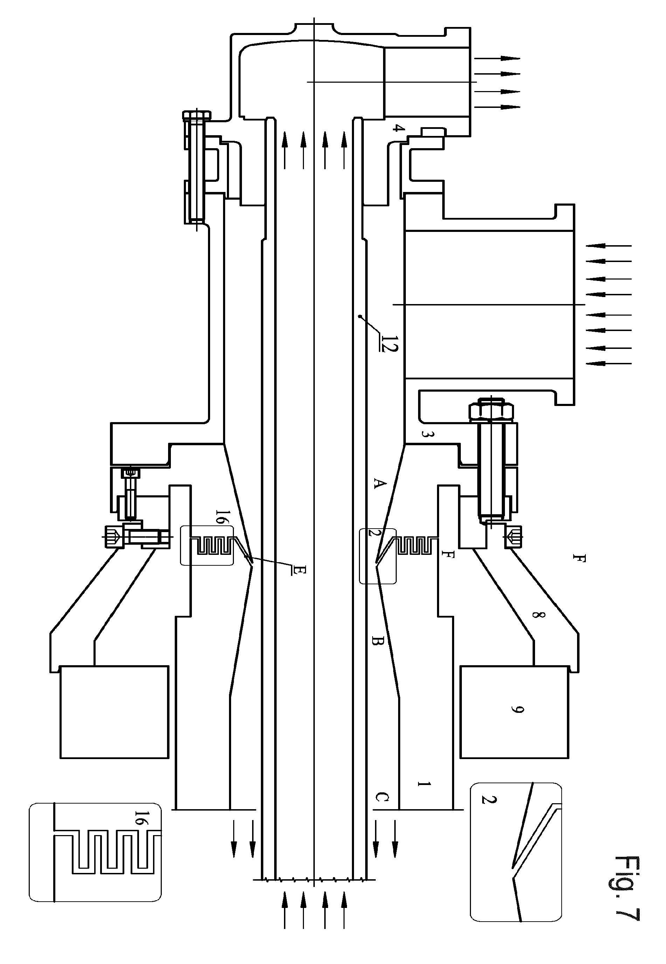

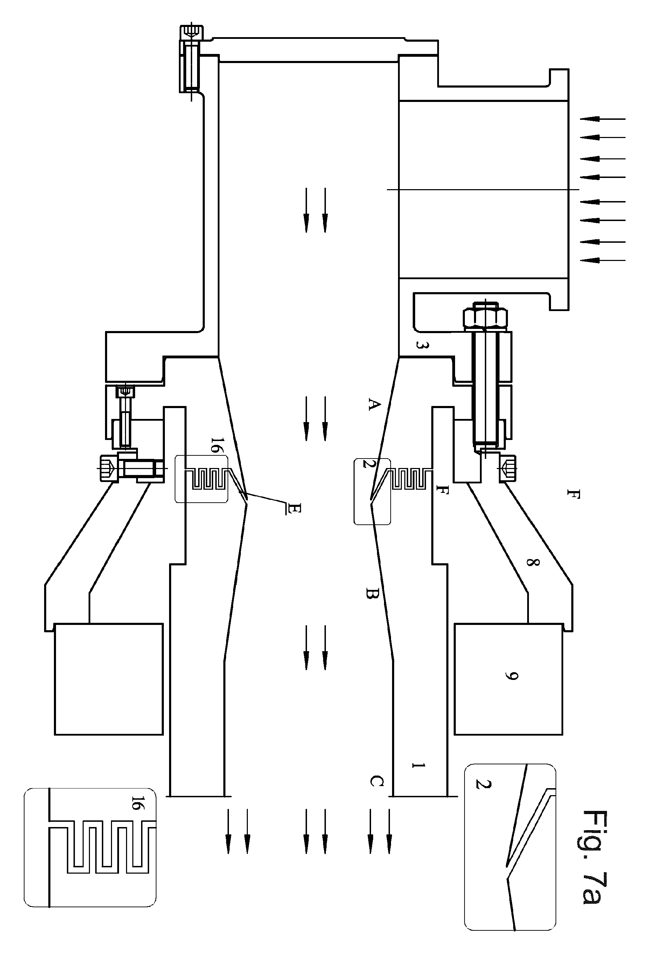

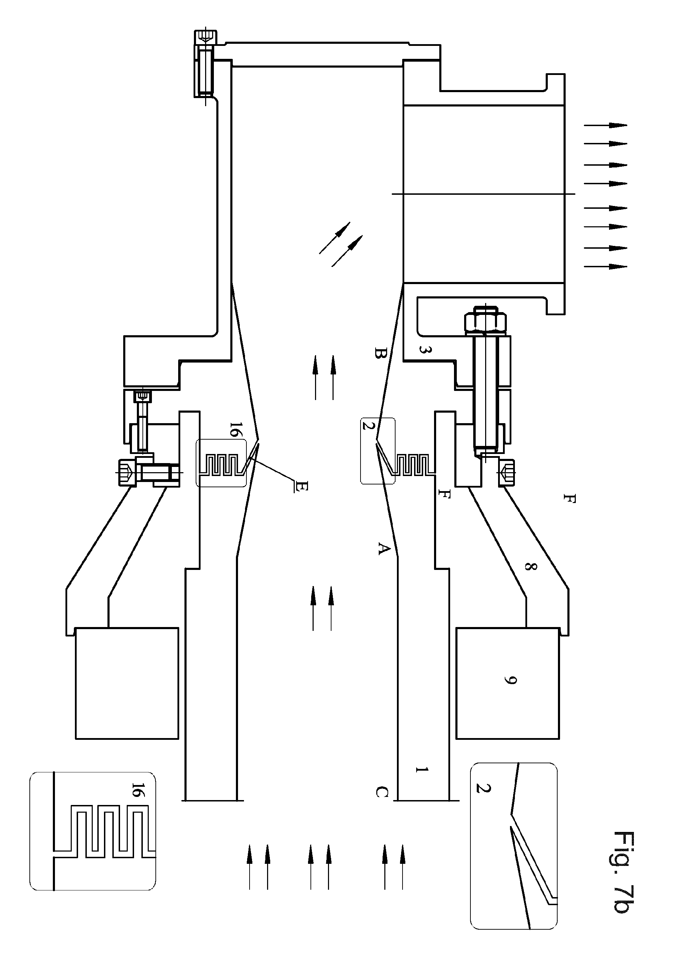

Figur 7 eine schematisch vereinfachte Längsschnittdarstellung einer Drehgelenkverbindung gemäß einer weiteren beispielhaften Variante der vorliegenden Erfindung;
Figur 7 a eine Teilansicht einer schematisch vereinfachten Längsschnittdarstellung einer Drehgelenkverbindung gemäß einer weiteren beispielhaften Variante der vorliegenden Erfindung
Figur 7b eine weitere Teilansicht der Drehgelenkverbindung gemäß der Variante von Figur 7 a;

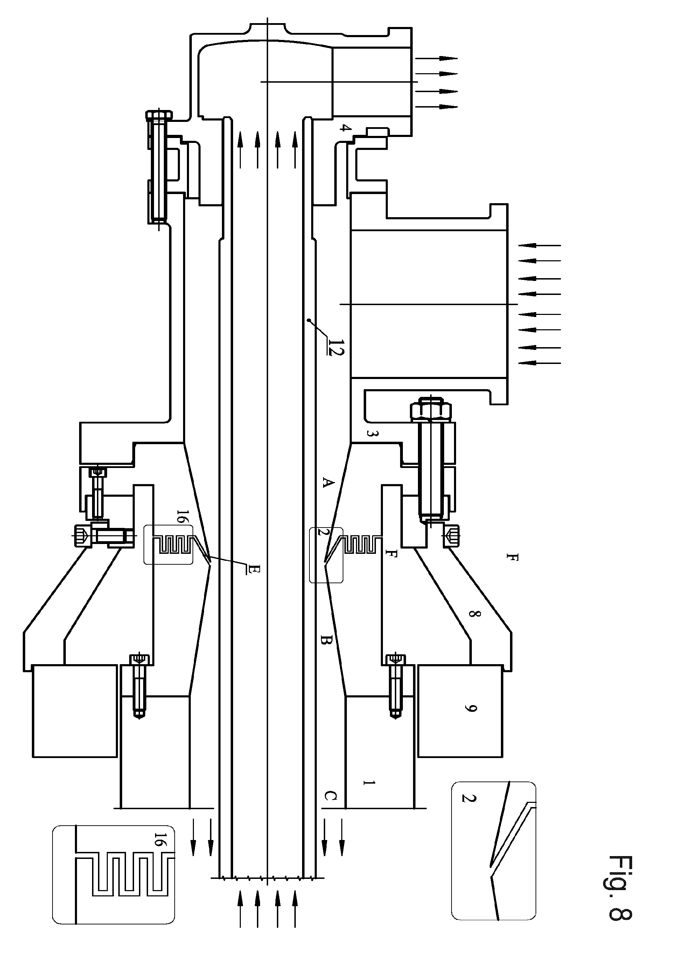

Figur 8 eine schematisch vereinfachte Längsschnittdarstellung einer Drehgelenkverbindung gemäß einer weiteren beispielhaften Variante der vorliegenden Erfindung;

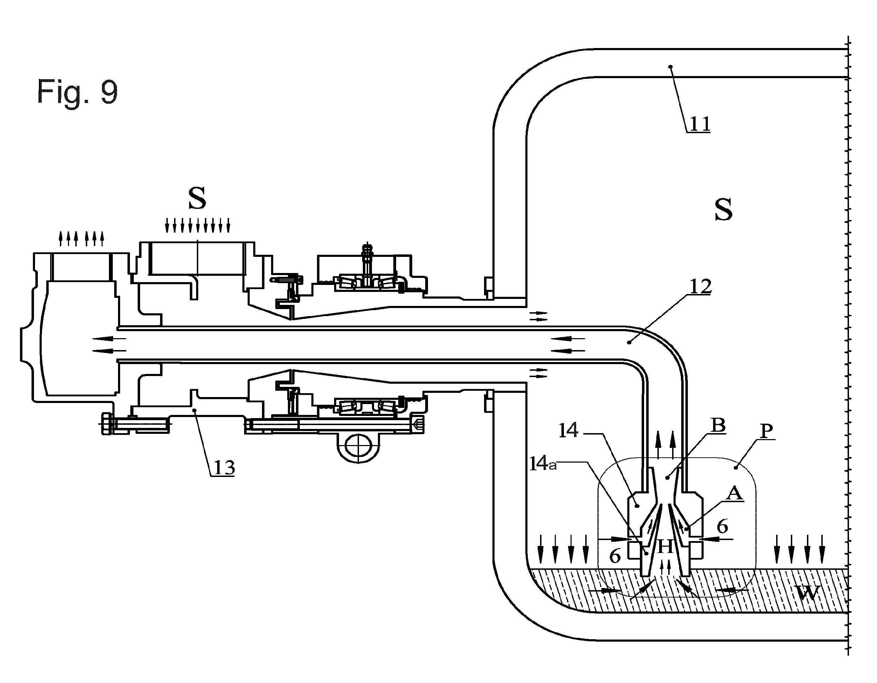

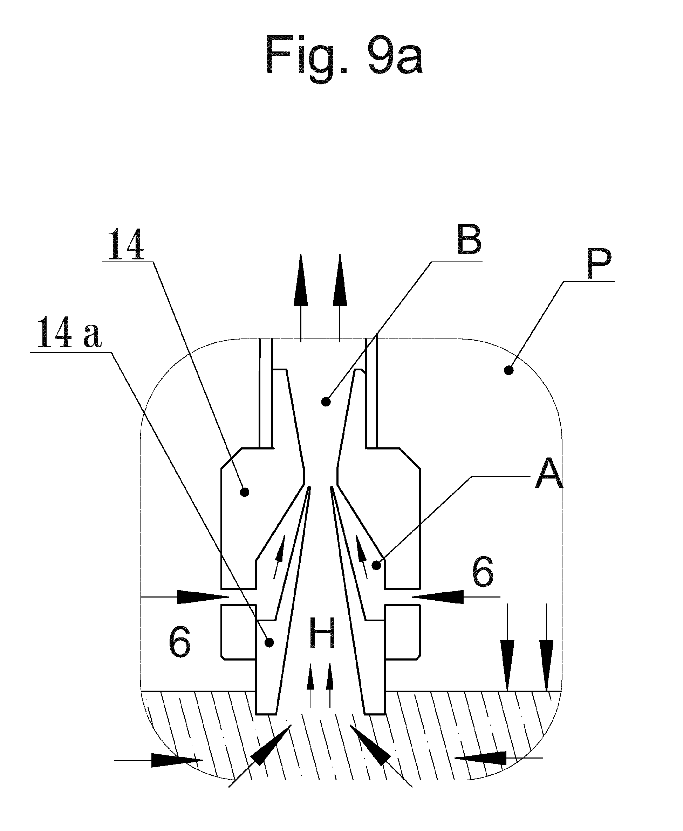

Figur 9 eine schematisch vereinfachte Darstellung einer dynamischen Pumpe gemäß einem Anwendungsbeispiel der vorliegenden Erfindung;
Figur 9 a eine vergrößerte Detailansicht eines Ausschnitts aus Figur 9.

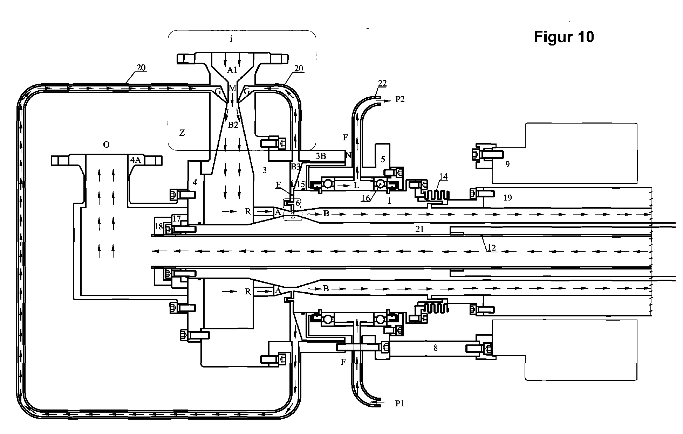

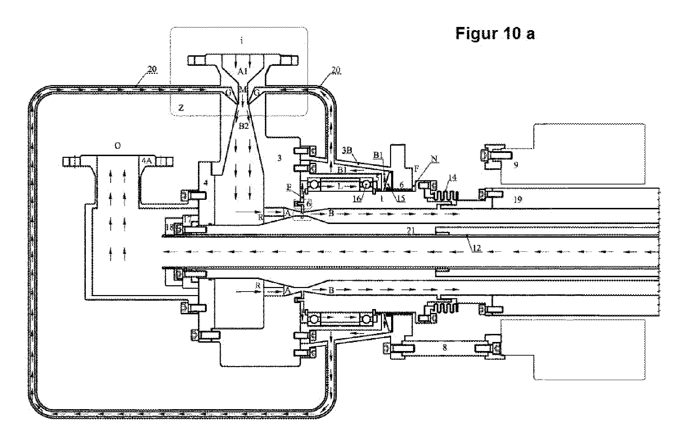

Figur 10 eine schematisch vereinfachte Längsschnittdarstellung einer Drehverbindung gemäß einer weiteren beispielhaften Variante der vorliegenden Erfindung;
Figur 10 a eine schematisch vereinfachte Längsschnittdarstellung einer Drehgelenkverbindung gemäß einer weiteren beispielhaften Variante der vorliegenden Erfindung;

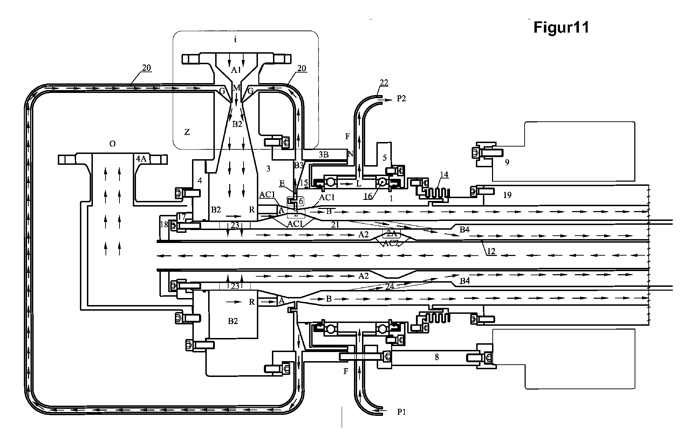

Figur 11 eine schematisch vereinfachte Längsschnittdarstellung einer Drehgelenkverbindung gemäß einer weiteren beispielhaften Variante der vorliegenden Erfindung;

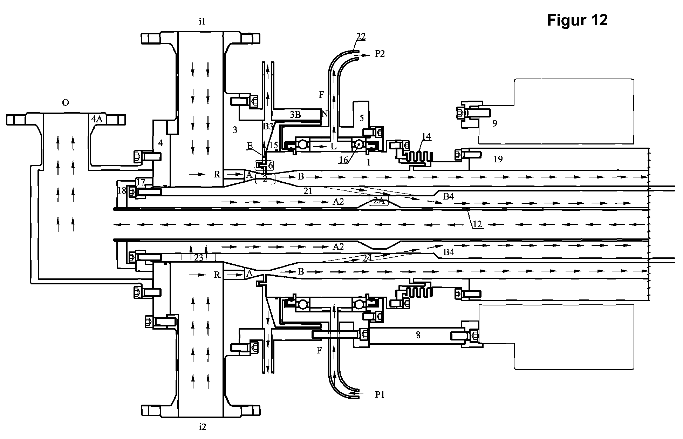

Figur 12 eine schematisch vereinfachte Längsschnittdarstellung einer Drehgelenkverbindung gemäß einer weiteren beispielhaften Variante der vorliegenden Erfindung;

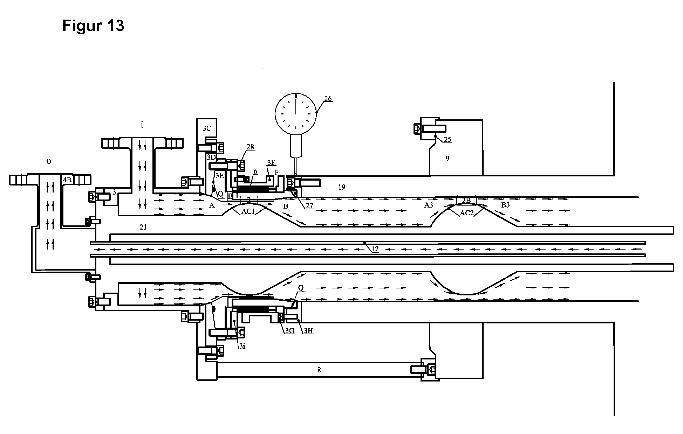

Figur 13 eine schematisch vereinfachte Längsschnittdarstellung einer Drehgelenkverbindung gemäß einer weiteren beispielhaften Variante der vorliegenden Erfindung;

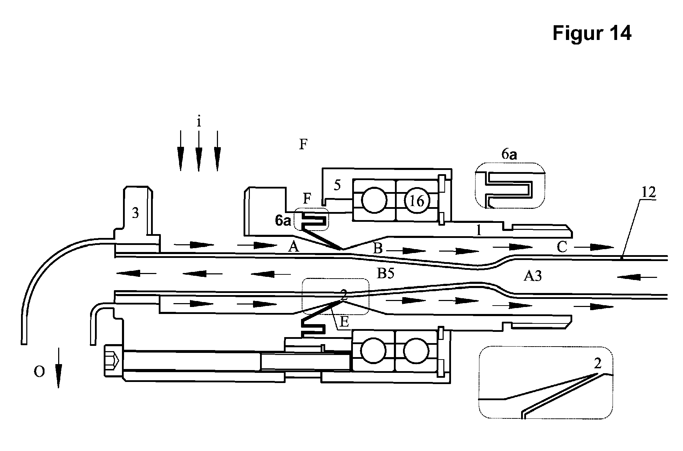

Figur 14 eine vergrößerte Detailansicht eines Ausschnitts einer Drehgelenkverbindung gemäß einer weiteren beispielhaften Variante der vorliegenden Erfindung;

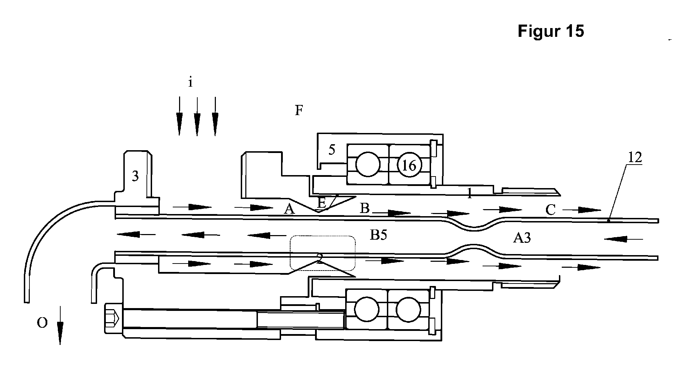

Figur 15 eine vergrößerte Detailansicht eines Ausschnitts einer Drehgelenkverbindung gemäß einer weiteren beispielhaften Variante der vorliegenden Erfindung;

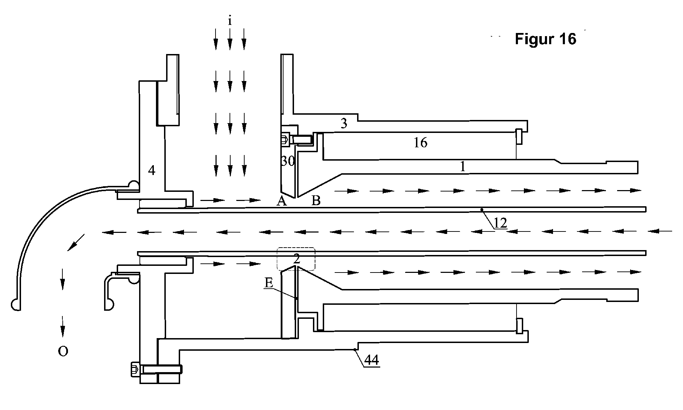

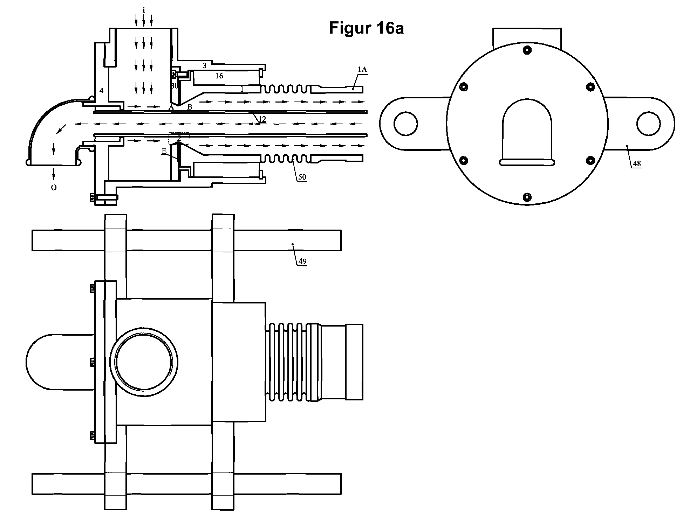

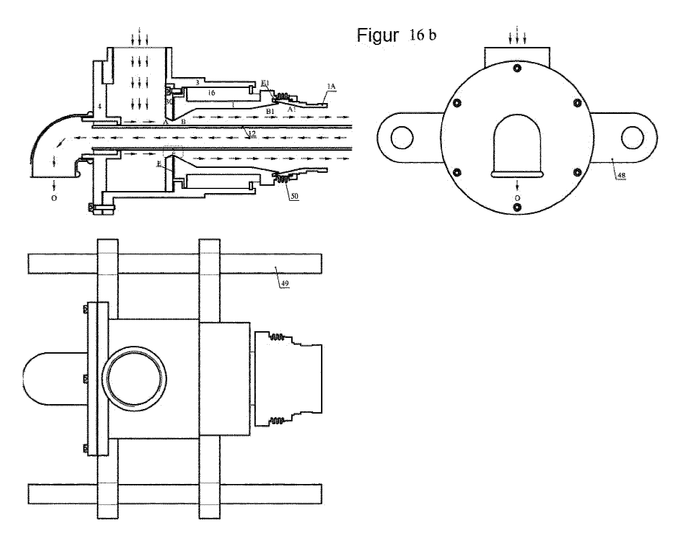

Figur 16 a eine Drehdurchführung gemäß einer weiteren Ausführungsvariante der Erfindung in drei Ansichten, nämlich im schematisch vereinfachten Längsschnitt, in der Draufsicht und in der stirnseitigen Ansicht;
Figur 16 eine vergrößerte Darstellung eines Ausschnitts aus dem Längsschnitt gemäß der Variante von Figur 16 a;
Figur 16b eine schematische Darstellung einer weiteren beispielhaften Ausführungsvariante der vorliegenden Erfindung in drei Ansichten, ähnlich der Variante von Figur 16 a;

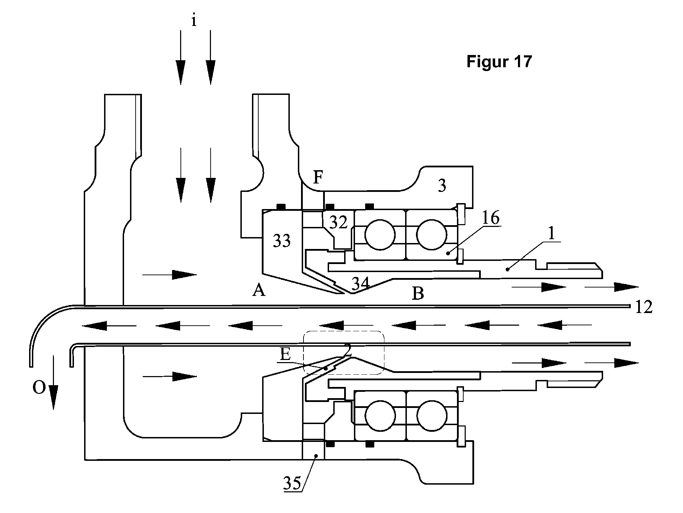

Figur 17 eine vergrößerte schematische Längsschnittansicht einer Drehgelenkverbindung gemäß einer weiteren beispielhaften Variante der vorliegenden Erfindung;

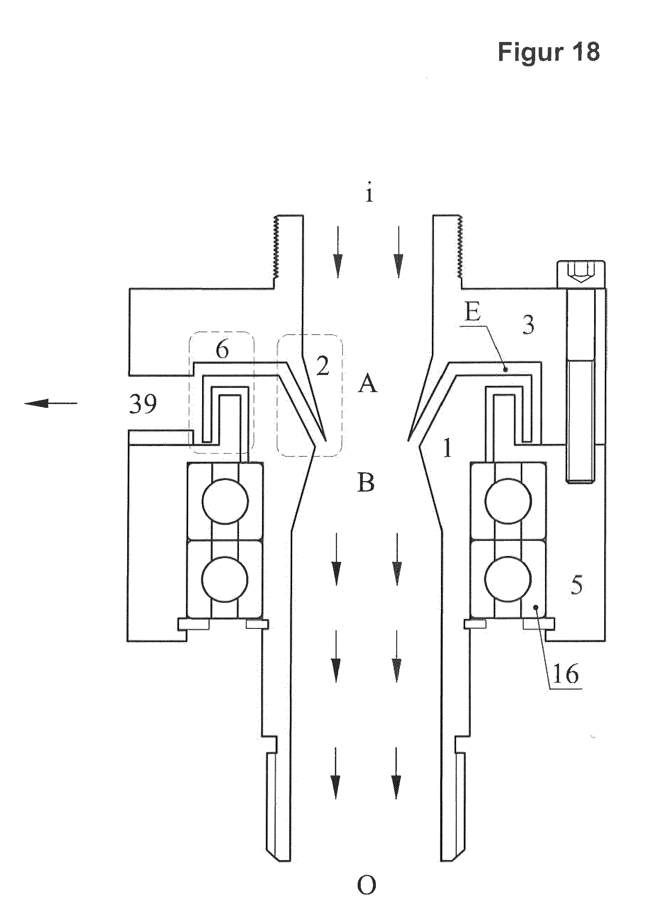

Figur 18 eine schematisch vereinfachte Längsschnittdarstellung einer weiteren beispielhaften Ausführungsvariante der Erfindung;

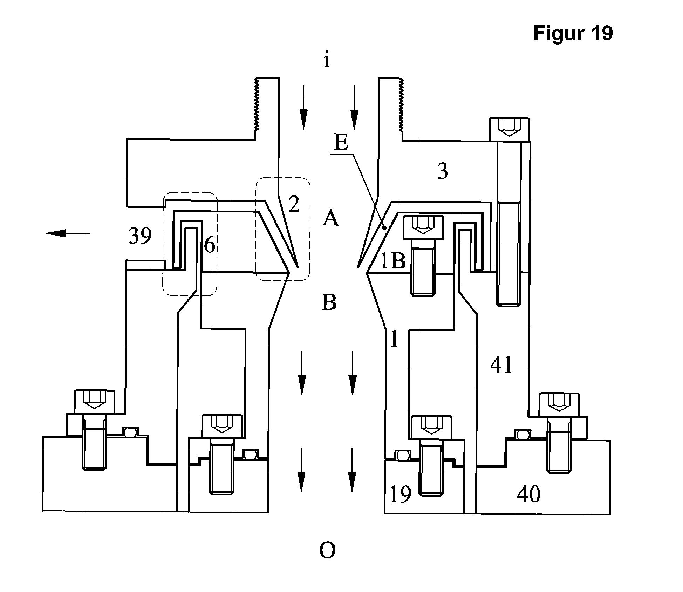

Figur 19 eine schematisch vereinfachte Längsschnittdarstellung einer weiteren beispielhaften Ausführungsvariante der Erfindung;

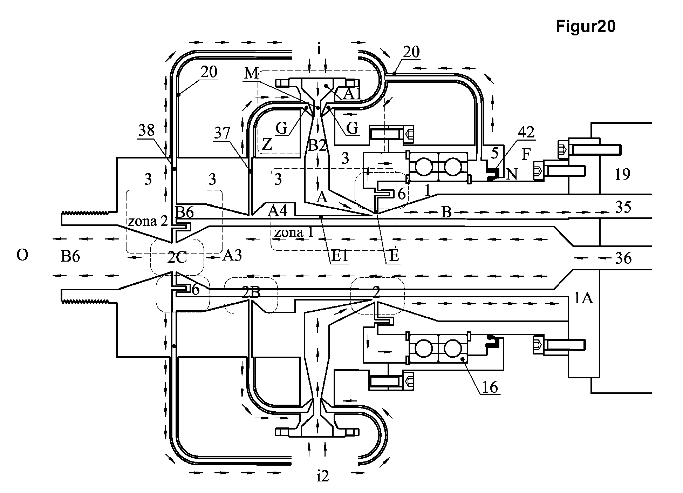

Figur 20 eine schematisch vereinfachte Längsschnittdarstellung einer weiteren beispielhaften Ausführungsvariante der Erfindung;

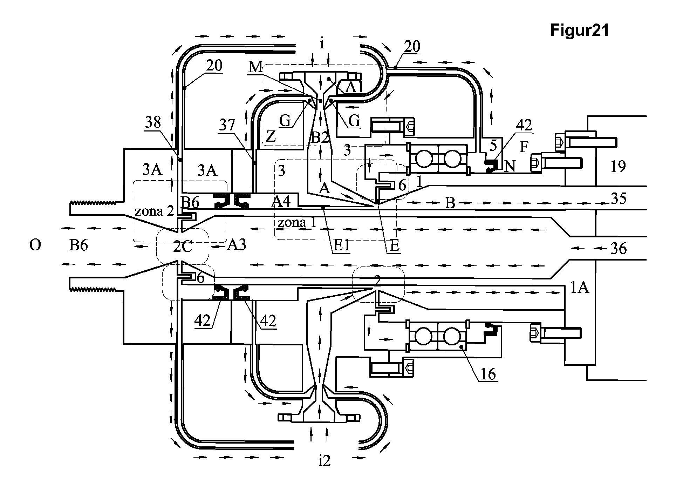

Figur 21 eine schematisch vereinfachte Längsschnittdarstellung einer weiteren beispielhaften Ausführungsvariante der Erfindung;

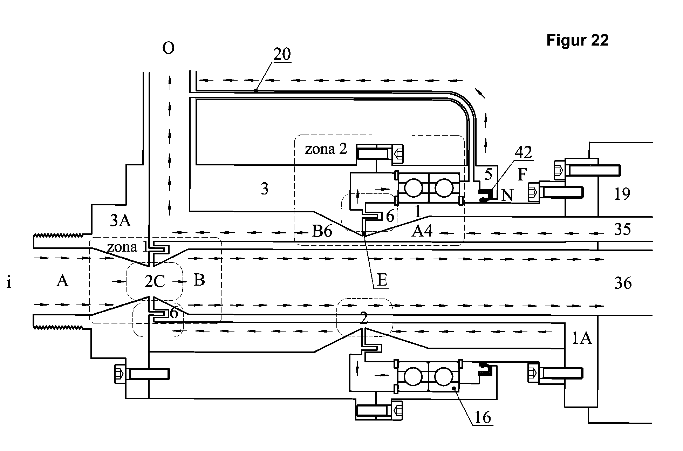

Figur 22 eine schematisch vereinfachte Längsschnittdarstellung einer weiteren beispielhaften Ausführungsvariante der Erfindung;

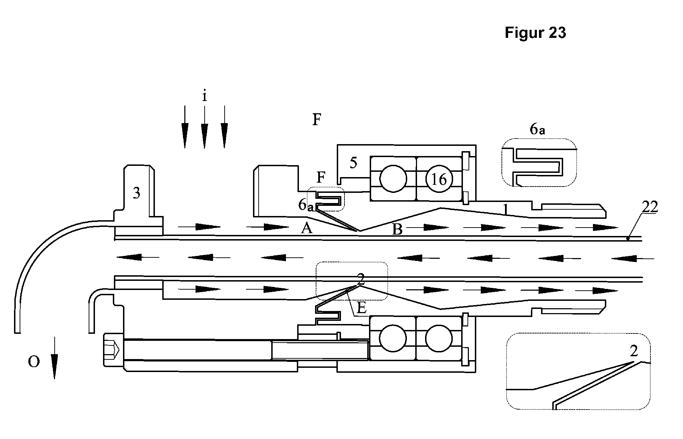

Figur 23 eine schematisch vereinfachte Längsschnittdarstellung einer weiteren beispielhaften Ausführungsvariante der Erfindung;

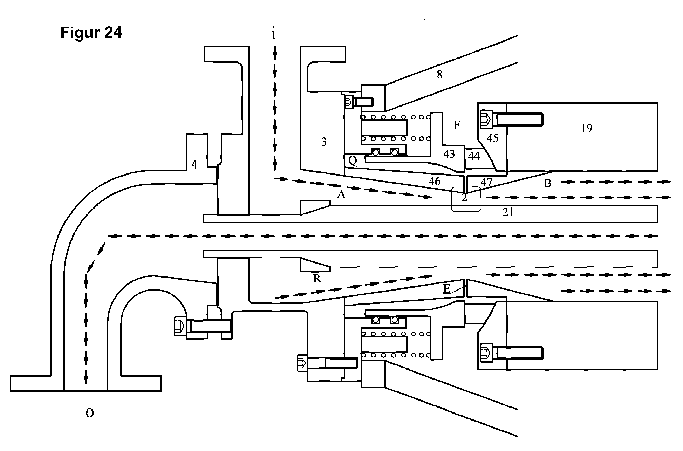

Figur 24 eine schematisch vereinfachte Längsschnittdarstellung einer weiteren beispielhaften Ausführungsvariante der Erfindung;

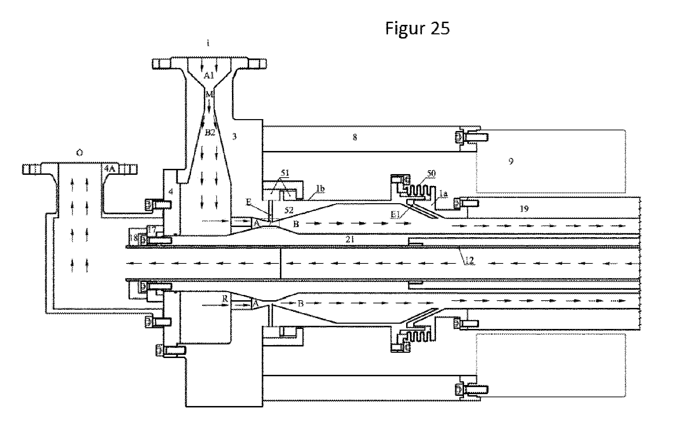

Figur 25 eine schematisch vereinfachte Längsschnittdarstellung einer weiteren beispielhaften Ausführungsvariante der Erfindung;

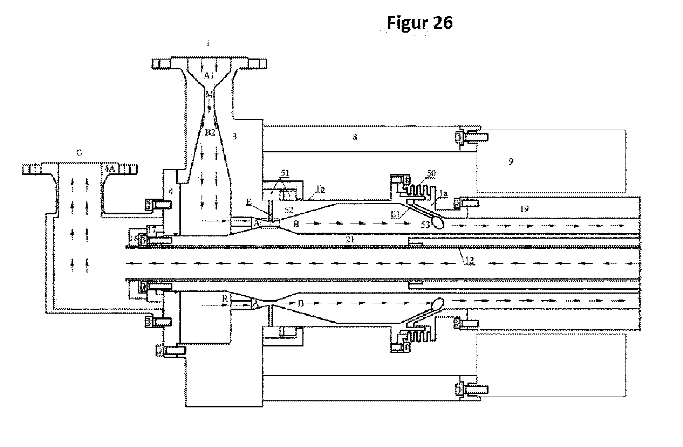

Figur 26 eine schematisch vereinfachte Längsschnittdarstellung einer weiteren beispielhaften Ausführungsvariante der Erfindung.

Die erste mögliche Variante gemäß der vorliegenden Erfindung besteht darin, von der Außenseite einer Welle her abzudichten. Über die Strömungsgeschwindigkeit des Fluids ist sichergestellt, das in dem Zwischenraum E zwischen der Welle 1 und der Stelle der dynamischen Dichtung 2 ein Druck herrscht, der gleich dem atmosphärischen Druck oder dem Druck außerhalb der rotierenden Maschine in dem offenen Raum F ist, so dass das Fluid nicht aus der Dichtung und der rotierenden Maschine austreten kann. Dieser Druck kann natürlich eingestellt und erhöht oder abgesenkt werden je nach Bedarf.

Da sichergestellt ist, dass in dem Zwischenraum E zwischen der Stelle 2 der dynamischen Dichtung und der Welle 1 ein höherer oder niedrigerer Druck eingestellt werden kann oder auch ein Unterdruck, kann ein Zustand hergestellt werden zwischen Druck und Unterdruck. In diesem Zustand zwischen Druck und Unterdruck wird eine Leckage des FLuids an der Stelle der dynamischen Dichtung verhindert. Auf diese Weise erfolgt eine Neutralisierung an der Stelle des Zwischenraums E zwischen der Welle 1 und der Stelle der dynamischen Dichtung 2. Der Spalt E kann verschiedene Winkel einnehmen und gerade elliptisch oder sphärisch geformt sein.

Beispielhaft soll dies für eine Drehgelenkverbindung (rotary joint) erläutert werden. Bei einer Drehgelenkverbindung (rotierende Dichtung) kann diese Art der Abdichtung bei allen Typen eingesetzt werden, bei denen, entweder ein Fluid in einer Richtung strömt, ein Fluid in zwei Richtungen strömt oder ein Fluid oder Fluide in mehreren Richtungen strömen. Es kann ein Fluid oder mehrere verschiedene Arten von Fluiden für die Abdichtung verwendet werden. Diese Art von rotierender Dichtung besteht in aller Regel aus den folgenden Bauteilen: Einer Welle 1, der Stelle der dynamischen Dichtung 2, dem Gehäuse 3, dem weiteren Gehäuse 4 und einem Lagergehäuse 5.

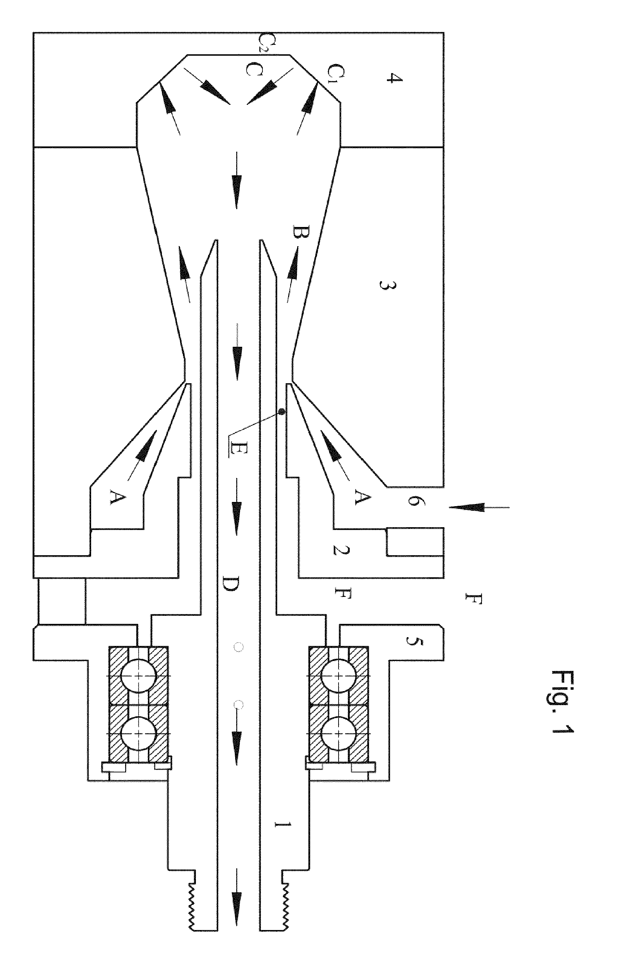

Nachfolgend wird zunächst auf die Figur 1 Bezug genommen und anhand dieser wird eine erste beispielhafte Ausführungsvariante der vorliegenden Erfindung erläutert. Über die Öffnung 6 können eines oder mehrere Fluide in die Kammer A eintreten, in der das Fluid eine Beschleunigung erfährt. Die Öffnung 6 kann sich auch in anderen Bereichen der Vorrichtung befinden ebenso wie die Anordnung der Kammer A variabel ist. Es können auch mehr als eine Öffnung und mehr als eine Kammer vorhanden sein, was in der Zeichnung durch eine weitere Kammer A auf der anderen Seite der Anordnung, der Öffnung 6 gegenüber liegend angedeutet ist. Der jeweilige Winkel der Kammer A in Bezug auf die Mittelachse der Anordnung, d.h. der Einströmwinkel des Fluids gemäß dem Pfeil A in Figur 1 kann variieren. Ebenso kann die Form der Kammer variieren mit beispielsweise geradlinigen, sphärischem oder elliptischen Verlauf im Querschnitt. Wichtig ist dabei nur, dass sich die Kammer A im Strömungsverlauf verjüngt, so dass an der Stelle mit geringstem Querschnitt die höchste Strömungsgeschwindigkeit erreicht wird. An dieser Engstelle im stromabwärts gelegenen Endbereich der Kammer A ist diese mit der Kammer B verbunden, die sich in der Folge in Strömungsrichtung allmählich verbreitert, so dass ein Druckabfall in der Kammer B auftritt.

In dem kanalartigen vergleichsweise schmalen Zwischenraum (Spalt) E zwischen der Welle 1 und der dynamischen Dichtung 2 kann ein Unterdruck oder Überdruck oder ausgeglichener Druck herrschen. Dieser Zwischenraum E dient der Neutralisierung und Verhinderung von Leckagen in den nach außen hin offenen Raum F, der sich radial zwischen der Dichtung 2 und dem Lager 5 erstreckt und durch den sonst ein Fluid nach außen hin entweichen könnte.

Die Geometrie der zweiten Kammer B ist ebenfalls nicht kritisch, ihre Seitenwände können im Winkel variieren ebenso wie die Querschnittsform der Kammer B variieren kann und die Begrenzungswände geradlinig oder gekrümmt verlaufen können mit sphärischer oder beispielsweise elliptischer Krümmung. Wichtig ist lediglich, dass durch die Verengung zwischen der Kammer A und der Kammer B ein statischer Druckabfall und eine Erhöhung der Strömungsgeschwindigkeit auftreten. Diese Größen und die Verringerung der Strömungsgeschwindigkeit in der Kammer B können beispielsweise beeinflusst werden durch eine Kombination von mehreren Kammern A, sofern alle dieser Kammern A jeweils eine Verbindung zur Kammer B haben. Anstelle der Kammern A kann man einfache Bohrungen vorsehen, die zylindrisch, konisch oder anders geformt sein können und beispielsweise vom Außenrand des Gehäuses 3 her sich radial einwärts oder schräg einwärts erstrecken können. Anstelle von Bohrungen können auch Nuten unterschiedlicher Formen und Größen vorgesehen sein, die im Prinzip die gleiche Aufgabe erfüllen wie die Kammern A in Figur 1. Man kann auch Kammern wie in dem Ausführungsbeispiel mit Bohrungen, Kanälen, Nuten oder dergleichen kombinieren.

Das Fluid tritt somit unter einem bestimmten Druck durch die Öffnungen 6 in Pfeilrichtung ein, strömt dann durch die Kammern A (oder durch Bohrungen oder Nuten), es kommt zu einer Erhöhung der Strömungsgeschwindigkeit durch die Engstelle und danach entspannt sich das Fluid in die Kammer B und strömt in Pfeilrichtung weiter in die sich anschließende Kammer C. Diese Kammer C weist eine stirnseitige Wand C₂ am Kopfende auf, an die sich jeweils abgeschrägte Wandbereiche C₁ anschließen, die wiederum in die Seitenwände dieser Kammer C übergehen, welche sich achsparallel und etwa rechtwinklig zu der stirnseitigen Wand C₂ in dem Gehäuse 4 erstrecken. Das Gehäuse 4 schließt sich wiederum in Strömungsrichtung des Fluids gesehen (Pfeile) an das Gehäuse 3 an, in dem sich die Kammer B und die Kammer (die Kammern) A befinden. Die Welle 1 liegt zentrisch in der Kammer B und wird somit außen von dem Gehäuse 3 konzentrisch umgeben. Der Winkel, den die beiden abgeschrägten Bereich C₁ mit der stirnseitigen Wand C₂ einnehmen kann variieren, der eingezeichnete Winkel von etwa 45 ° ist nur beispielhaft zu verstehen. Ebenso gut ist es möglich, dass die Bereiche C₁ konkav gewölbt sind.

Die Kammer C mit ihrer stirnseitigen Wand C₂ am Kopfende dient der Richtungsumkehr des Fluids und die Winkel der abgeschrägten Bereiche C₁ spielen eine Rolle für den erfindungsgemäß erwünschten Effekt der Abdichtung, welcher nämlich einen konstanten Strom des Fluids voraussetzt. Der Fluidstrom darf demnach nicht abreißen. Wenn dieser Fall dennoch eintreten würde, wird ein Ventil irgendwo im Strömungsweg geschlossen oder die rotierenden Bauteile würden abgestellt und das System bleibt unter Druck. Um dann zu verhindern, dass Fluid über den Zwischenraum E und den nach außen hin offenen Raum F entweicht, kann man eine Lippendichtung, mechanische Dichtung, Membrandichtung, Dichtungsringe oder Absperrventile oder andere geeignete Dichtungstypen vorsehen, je nach Anforderung, insbesondere, ob ein Überdruck oder ein im System herrschender Unterdruck gegen einen höheren Außendruck abgedichtet werden muss.

Die Effizienz der Funktion der dynamischen Dichtung kann verbessert werden durch zusätzliches Einspeisen von Fluid in die Kammer B. Dies kann auf unterschiedliche Weise erreicht werden, beispielsweise durch Bohren einer oder mehrerer Bohrungen von außen nach innen durch das Gehäuse 3, wobei es sich um zylindrische oder konische Bohrungen handeln kann und der Winkel und der Querschnitt dieser Bohrungen variieren kann. Alternativ können Nuten im Gehäuse 3 vorgesehen werden oder zusätzliche Kammern ähnlich wie die Kammern A werden dort angeordnet. Durch diese Bohrungen, Nuten oder Kammern tritt zusätzliches Fluid ein ebenso wie durch die Öffnungen oder Kanäle 6. Dadurch kann der Effekt der Erhöhung der Strömungsgeschwindigkeit des Fluids beim Eintritt in die Kammer B und des Druckabfalls verstärkt werden.

Wie durch die Pfeile in Figur 1 ersichtlich ist strömt das Fluid nach der Richtungsumkehr an der stirnseitigen Wand C₂ in Gegenrichtung zur Eintrittsrichtung in die Kammer B und gelangt dann in den mittigen Kanal D, der sich in axialer Richtung in der Hohlwelle 1 erstreckt und strömt dann weiter mittig und axial durch das Innere der Hohlwelle in Richtung der Pfeile (in der Zeichnung nach rechts), um das System der Dichtungsanordnung zu verlassen. Die Hohlwelle 1 rotiert und ist über das Lager 5 drehbar gelagert, während die Teile 4 und 3 des Gehäuses ebenso wie die dynamische Dichtung 2 selbst nicht rotieren. Da kein unmittelbarer Kontakt mehr zwischen den Teilen der Dichtung 2 und der rotierenden Hohlwelle gegeben ist, entsteht auch kein Abrieb und kein Verschleiß an diesen Bauteilen.

Nachfolgend wird unter Bezugnahme auf Figur 2 ein weiteres alternatives Ausführungsbeispiel der vorliegenden Erfindung näher erläutert. Die Anordnung gemäß Figur 2 umfasst eine Hohlwelle 1, eine dynamische Dichtung 2, die in dem Ausschnitt rechts unten in der Zeichnung noch einmal teilweise vergrößert dargestellt ist, ein Gehäuse 3, ein Lagergehäuse 5 sowie eine Labyrinthdichtung 6 a, die in dem Ausschnitt rechts oben teilweise noch einmal vergrößert dargestellt ist.

Durch die Strömungsgeschwindigkeit des Fluids wird sichergestellt, dass in dem Zwischenraum E des Spalts zwischen der dynamischen Dichtung 2 und der Hohlwelle 1 ein Druck herrscht, der mindestens gleich dem atmosphärischen Druck oder dem in dem Raum F außerhalb der rotierenden Bauteile der Maschine herrschenden Druck ist, so dass kein Leck entstehen kann, durch das Fluid aus der Dichtungsanordnung austreten kann. Dieser Druck kann einstellbar sein, so dass eine Erhöhung oder Absenkung des Druckes nach Bedarf möglich ist.

Zu der dynamischen Dichtungsanordnung 2 kann eine Labyrinthdichtung 6 a hinzugefügt werden, die radial außerhalb des Spalts E angeordnet ist, wodurch der Abdichtungseffekt verstärkt wird. Diese Labyrinthdichtung kann vergleichsweise einfach aufgebaut sein wie in dem vergrößerten Detailausschnitt in Figur 2 dargestellt oder auch in den Ausführungsbeispielen der Figuren 2a, 3, 4, 5 oder 6, oder auch komplexer mit einer stärkeren Verschachtelung des Labyrinths wie in den Zeichnungen Figuren 7, 7a, 7b oder 8 beispielhaft dargestellt. Die Breite des Spalts des Zwischenraums E kann je nach Bedarf gewählt werden, beispielsweise entweder so, dass kein Fluidstrom durch den Spalt E geht, so dass eine vollständige Abdichtung vorliegt. Oder es wird angestrebt, dass der Druck in dem Zwischenraum E geringer ist als der Arbeitsdruck. In diesem Fall ist es möglich ein gleiches oder ein anderes Fluid von dem offenen Raum F ausgehend in die Kammer B im Inneren der Hohlwelle 1 einströmen zu lassen.

Die Strömungsrichtung des Arbeitsfluids durch die Hohlwelle 1 ist in Figur 2 durch die Pfeile angedeutet. Das Fluid strömt zunächst durch die Kammer A in dem Gehäuse vor der Dichtungsanordnung mit der dynamischen Dichtung 2 und gelangt dann in die Kammer B, die stromabwärts der dynamischen Dichtung 2 in der Hohlwelle 1 liegt. Die Hohlwelle 1 ist in dem Lager 5 rotierend gelagert. Die Form der Kammer B kann variiert werden, beispielsweise durch Änderung des Winkels der Seitenwände der Kammer B, die auch nicht unbedingt konisch verlaufen müssen, sondern auch beispielsweise auch im Querschnitt einen Verlauf entlang einer gekrümmten Linie, konkav sphärisch oder elliptisch haben können. Wesentlich ist bei dieser Anordnung gemäß Figur 2 nur, dass eine Engstelle im Bereich der dynamischen Dichtung 2 zwischen der Kammer A und der sich in Strömungsrichtung des Fluids anschließenden Kammer B gegeben ist, so dass das Fluid im Bereich der dynamischen Dichtung 2 eine Beschleunigung seiner Strömungsgeschwindigkeit erfährt. Diese Beschleunigung ergibt sich durch die allmähliche Verengung am Ende der Kammer A, auf die nach der Engstelle eine allmähliche Erweiterung des Querschnitts zu Beginn der Kammer B folgt. Weiter stromabwärts im Bereich der Kammer C hat der Innenraum der Hohlwelle 1 dann wieder einen maximalen gleichbleibenden Querschnitt.

Auch der Spalt, der den Zwischenraum E bildet kann sich in unterschiedlichen Winkeln zur Achse zwischen Hohlwelle 1 und Gehäuse 3 erstrecken, er kann einen geradlinigen Verlauf wie in der Zeichnung Figur 2 oder gegebenenfalls auch einen Verlauf entlang einer Kurvenlinie aufweisen. Die Form und die Abmessungen des Spalts hängen von der Art des Fluids, vom Druck des Fluids und gegebenenfalls weiteren Faktoren ab.

Eine zweite mögliche Variante gemäß der vorliegenden Erfindung besteht darin, von der Innenseite einer Welle her abzudichten. Eine Drehgelenkverbindung wie sie beispielsweise in Figur 3 abgebildet ist, umfasst im Wesentlichen: eine Welle 1, eine Stelle mit einer dynamischen Dichtung 2, ein Gehäuse 3, ein Lagergehäuse 5 und eine Labyrinthdichtung 6 a.

Durch die Geschwindigkeit des Fluidstroms wird sichergestellt, dass in dem Zwischenraum E zwischen der Welle 1 und der Stelle der dynamischen Dichtung 2 der Druck gleich dem atmosphärischen Druck oder dem Druck außerhalb der rotierenden Maschine ist, also in dem offenen Raum F, so dass das Fluid nicht aus der Dichtung oder der rotierenden Maschine austreten kann. Natürlich kann der Druck eingestellt werden, so dass er nach Bedarf erhöht oder gesenkt werden kann.

Da sichergestellt ist, dass in dem Zwischenraum E zwischen der Stelle 2 der dynamischen Dichtung und der Welle 1 ein höherer oder niedrigerer Druck eingestellt werden kann oder auch ein Unterdruck, kann ein Zustand hergestellt werden zwischen Druck und Unterdruck. In diesem Zustand zwischen Druck und Unterdruck wird eine Leckage des Fluids an der Stelle der dynamischen Dichtung verhindert. Auf diese Weise erfolgt eine Neutralisierung an der Stelle des Zwischenraums E zwischen der Welle 1 und der Stelle der dynamischen Dichtung 2.

Es kann gegebenenfalls eine Dichtung des Labyrinthtyps 6 a an der Stelle der dynamischen Dichtung 2 hinzugefügt werden, so dass beide Dichtungen gemeinsam oder jede für sich allein abdichten können. Die Labyrinthdichtung 6 a kann sehr einfach ausgeführt sein wie dies in den Ausführungsbeispielen gemäß den Figuren 2, 3 und 4 gezeigt ist oder komplexer wie beispielsweise in den Figuren 7a oder 8 dargestellt ist.

Der Zwischenraum in dem Spalt E und in dem Labyrinth hängt in seiner Größe davon ab, was erreicht werden soll. Es kann erreicht werden, dass kein Fluid durch den Spalt E strömt, dann liegt vollständige Abdichtung vor. Es kann auch angestrebt werden, dass Vakuum oer ein Unterdruck im Inneren vorliegt, der geringer ist als der Druck in dem Spalt E. Die schafft die Möglichkeit, eine gleichartiges oder ein anderes Fluid von dem offenen Raum F in die Kammer B zu injizieren. In der Figur 5 ist eine Membrandichtung 7 erkennbar, die so ausgebildet ist, dass sie entweder im Vakuum oder unter Druck arbeitet.

Die Kammer B kann unterschiedliche Winkel aufweisen und sie kann geradlinig, elliptisch oder sphärisch geformt sein. Es ist dabei nur wichtig, dass ein Druckabfall und eine Beschleunigung in der Kammer B und an der Stelle der dynamischen Dichtung 2 erfolgt. Die Kammer A kann ebenfalls verschiedene Winkel aufweisen, geradlinig, elliptisch oder sphärisch ausgebildet sein. Es ist lediglich von Bedeutung, dass ein Druckabfall und eine Fluidbeschleunigung in der Kammer B auftreten.

Auswahl des Ortes der dynamischen Dichtung 2. Der Spalt E kann unterschiedliche Winkel aufweisen, geradlinig oder gekrümmt, elliptisch oder sphärisch ausgebildet sein, abhängig davon, welches Fluid und welcher Druck verwendet werden und welcher Effekt erzielt werden soll.

Die Ausführungsbeispiele gemäß den Figuren 1, 2, 2a und 3 zeigen eine dynamische Dichtung 2, die sich insbesondere für Flüssigkeiten wie Wasser oder auch viskosere Flüssigkeiten wie Öl eignet, während in dem Ausführungsbeispiel gemäß Figur 4 die Stelle der dynamischen Dichtung 2 gewählt wurde mit besonderer Eignung für dünnflüssige Fluide wie zum Beispiel Luft, Dampf oder andere Gase.

Die Drehverbindung in dem Ausführungsbeispiel gemäß den Figuren 4 und 5 ist für eine hohe Beschleunigung vorgesehen.

In Figur 6 ist eine derartige reduzierte dynamische Dichtung dargestellt. Im Vergleich zu Figur 5 erkennt man, dass die Engstelle weniger ausgeprägt und damit eine geringere Querschnittsreduzierung gegeben ist, was dazu führt, dass die Kammern A und B, zwischen denen sich in den Figuren 4 und 5 die Querschnittsreduzierung ergibt, eine erheblich geringere Länge aufweisen und im Bereich der dynamischen Dichtung 2 in der Hohlwelle 1 nur noch eine geringfügige Verengung auftritt, wobei aber gleichwohl die Funktion der hier vereinfachten dynamischen Dichtung noch gegeben ist. Das Fluid strömt in den Ausführungsbeispielen der Figuren 4, 5 und 6 radial in Pfeilrichtung durch den Zugang im Gehäuse 3 in die Kammer A, strömt an der dynamischen Dichtung 2 vorbei in axialer Richtung durch eine Art Ringkanal in die Kammer B und strömt dann weiter in die Kammer C in axialer Richtung durch die Hohlwelle 1. In der Hohlwelle 1 ist konzentrisch ein Rohr 12 angeordnet, durch das ein Fluid abgeführt (z.B. abgesaugt) werden kann, welches im Gegenstrom zum Fluidstrom durch die Hohlwelle axial durch das Rohr 12 strömt und dann durch einen Ausgang radial im Gehäuse 4 die Anordnung verlässt.

In dem Ausführungsbeispiel gemäß Figur 2 a ist gezeigt, dass die dynamische Dichtung 2 und die Labyrinthdichtung 6 a im Vergleich zu der Variante von Figur 2 im Winkel hinsichtlich des Spalts E in entgegengesetzter Richtung ausgerichtet sein kann, so dass der Fluidstrom durch die Hohlwelle 1 in der Variante von Figur 2a in entgegengesetzter Richtung erfolgen kann, verglichen mit der Variante von Figur 2.

Alle zuvor genannten Varianten von Drehgelenkverbindungen und die jeweils gewählte Stelle, an der sich die dynamischen Dichtungen befinden, dienen dem Zweck, eine Abdichtfunktion zu schaffen, während ein Fluid strömt. Wenn kein Fluidstrom mehr vorhanden ist, wird die Maschine angehalten, wobei sie dann unter Druck steht und es besteht dann die Möglichkeit, dass das Fluid durch die dynamische Dichtung 2 nach außen dringt. Um dies zu verhindern, kann beispielsweise eine Membrandichtung 7 verwendet werden, wie sie in der Figur 6 gezeigt ist. Anstelle dieser Membrandichtung kann alternativ auch eine Lippendichtung, ein Dichtungsring oder eine andere einfache Dichtung eingesetzt werden, um den Druck zu halten, wenn die Maschine angehalten wird.

Die Variante nach dem Ausführungsbeispiel von Figur 7 zeigt eine Drehgelenkverbindung, die nicht über eigene Lager verfügt, sondern die Lager der rotierenden Maschine nutzt.

Hier besteht die Drehgelenkverbindung aus den folgenden Komponenten: der Welle 1 der rotierenden Maschine, der dynamischen Dichtung 2, dem Gehäuse 3 der Drehgelenkverbindung, dem weiteren Gehäuse 4 der Drehgelenkverbindung, der Labyrinthdichtung 6 a, der Spinne 8, einer ringförmigen Klammer, die das Lagergehäuse 9 der rotierenden Maschine mit dem Gehäuse 3 der Drehgelenkverbindung verbindet, und dem Siphonrohr 12.

In dieser Zeichnung wird gezeigt, was allgemein für alle hier geschilderten Varianten gilbt, dass die Stelle, an der sich die dynamische Dichtung 2 befindet und die Labyrinthdichtung 6 a aus einem Teil der Welle 1 der rotierenden Maschine gebildet sein können und aus einem Teil des Gehäuses 3 der Drehgelenkverbindung, wie in den Ausführungsbeispielen gemäß den Figuren 2 und 2a.

Im Vergleich beispielsweise zu der Variante von Figur 6 sieht man, dass in Figur 7 kein Lager für die Hohlwelle 1 vorhanden ist. Der Bereich A, in dem sich die erste Kammer A befindet, ist über eine Schraubverbindung mit dem Gehäuse 3 verbunden. Die Hohlwelle 1 ist zwischen der ersten Kammer A und der zweiten Kammer B getrennt durch die dynamische Dichtung 2, wobei hier eine Labyrinthdichtung 6 a zu dem offenen Raum F hin vorhanden ist und wobei sich stromabwärts an die dynamische Dichtung 2 und die Engstelle wie bei zuvor beschriebenen Ausführungsbeispielen die Kammer B anschließt. Der radiale Zugang für das Fluid liegt im Bereich des Gehäuses 3 und der radiale Ausgang für das abfließende Fluid liegt im Bereich des Gehäuses 4 (siehe jeweils die eingezeichneten Pfeile in Figur 7.) Das abströmende Fluid strömt dabei in einer Rohrleitung 12 axial in entgegengesetzter Richtung zu dem axial durch die Hohlwelle 1 strömenden Fluid, welches von der Kammer A über die Engstelle B in die Kammer C strömt, wobei die rohrförmige Leitung 12 konzentrisch innerhalb der Hohlwelle 1 liegt.

Bei der Variante von Figur 7 sind spinnenartige Auslegerarme 8 mit dem Gehäuse 3 verbunden, über die das Gehäuse 3 der Drehverbindung mit dem Lagergehäuse 9 der Maschine verbunden ist, so dass über diese Lager der Maschine auch die rotierende Hohlwelle 1 gelagert werden kann.

Das Ausführungsbeispiel von Figur 7 zeigt auch, dass die dynamische Dichtung 2 und die Labyrinthdichtung 6 a zum Beispiel einerseits endseitig im Stirnbereich aus der Hohlwelle 1 selbst geformt sein können und komplementär dazu aus einem stirnseitigen Endbereich von Teilen des Gehäuses 3 der Drehverbindung, so wie dies zum Beispiel auch bei den Varianten gemäß den Figuren 2, 2a und 3 der Fall ist.

Bei der Variante der Figur 8 sieht man, dass die dynamische Dichtung 2 und die Labyrinthdichtung 6 a austauschbare Bauteile sind, die an der rotierenden Hohlwelle 1 einerseits bzw. an dem Gehäuse 3 der Drehverbindung andererseits angebracht werden können.

Die Ausführungsbeispiele gemäß den Figuren 7 a und 7 b zeigen eine Drehverbindung mit spinnenartigen Auslegerarmen 8, jedoch mit nur einem einfachen Fluidstrom durch die Hohlwelle 1 in einer Richtung, während im Vergleich dazu bei den Varianten gemäß den Figuren 7 und 8 das Fluid außen durch die Hohlwelle 1 strömt und konzentrisch radial innen ein Fluid im Gegenstrom durch das Rohr 12 strömt. Wenn ein einfacher Fluidstrom vorhanden ist wie in den Figuren 7a, 7b, dann können zwei Drehverbindungen beispielsweise auf beiden Seiten eines Zylinders installiert sein. Figur 7 a zeigt die eine Drehverbindung an der Seite des Zylinders, an der das Fluid in diesen eintritt, während Figur 7b die zweite Drehverbindung an der anderen Seite des Zylinders zeigt, an der das Fluid austritt.

Die vorgenannten Drehverbindungen mit dynamischen Dichtungsanordnungen können beispielsweise eingesetzt werden bei Zylindern von Papiermaschinen und in ähnlichen Anwendungsbereichen, in denen es um die Trocknung von kondensiertem Wasser oder anderer Fluide geht.

In dem Ausführungsbeispiel gemäß den Figuren 9 und 9 a ist eine dynamische Pumpe P dargestellt, eine Anwendung, die derjenigen der dynamischen Abdichtung in Drehverbindungen ähnlich ist. Das Gehäuse der dynamischen Pumpe ist mit 14 bzw. 14 a bezeichnet. Die Öffnungen, über die Fluid eintritt, sind mit dem Bezugszeichen 6 bezeichnet. Es sind auch hier Kammern vorhanden, nämlich die erste Kammer A, in der das Fluid eine Beschleunigung erfährt, durch die sich stromabwärts anschließende Engstelle, wobei darauf stromabwärts die zweite Kammer B folgt, die sich in Strömungsrichtung im Querschnitt erweitert. Die Kammer A umgibt konzentrisch eine innere Kammer H, in der sich der Querschnitt in Strömungsrichtung auf die Engstelle hin verjüngt. Weiterhin ist eine Rohrleitung 12 vorhanden, über die Fluid zur Trocknung abgeführt werden kann, wobei in der Ausführungsvariante die Rohrleitung 12 in dem Zylinder 11 der Papiermaschine in einem 90 °-Bogen geführt ist und etwa mittig in Achsrichtung den Zylinder 11 verlässt. Der Zylinder 11 kann auch Teil einer anderen Maschine mit rotierenden Bauteilen sein. Die Drehverbindung ist mit 13 bezeichnet. S bezeichnet den Dampf, der über eine äußere Leitung (entspricht der Hohlwelle in den zuvor beschriebenen Beispielen) in den Zylinder 11 eintritt, dort zu Wasser W kondensiert und über die Pumpvorrichtung P, deren Kammern H und B sowie die Rohrleitung 12 abgepumpt wird. Wie man in Figur 9 erkennt, wird das Wasser über die Rohrleitung 12 im Gegenstrom abgepumpt zu dem Dampfstrom, der durch die Hohlwelle der Drehverbindung in den Zylinder 11 eintritt. Die Hohlwelle ist drehbar gelagert und die dynamische Dichtung befindet sich zwischen der Hohlwelle und dem Gehäuseabschnitt, über den der Dampf S radial in die Anordnung eintritt (siehe Pfeile), ähnlich wie bei den bereits zuvor beschriebenen Ausführungsbeispielen. Figur 9 a zeigt eine vergrößerte Detailansicht im Bereich des Gehäuses 14, 14 a der Pumpe.

Die Funktion der dynamischen Pumpe P ist ähnlich wie bei einer Wasserstrahlpumpe und nutzt im Grunde das Venturiprinzip, das der über die Öffnungen 6 eintretende Dampf S aufgrund seiner Beschleunigung das Wasser W in der Kammer H ansaugt und mitreißt in die Kammer B und dann abführt über die Rohrleitung 12 in Pfeilrichtung. Die innere Kammer H ist in der Zone des Zylinders 11 platziert, in der das Wasser W kondensiert. Die dynamische Pumpe P ermöglicht eine beschleunigte Trocknung von kondensiertem Wasser W aus dem Zylinder 11. Da das kondensierte Wasser W den Zylinder 11 kühlt, wird durch eine effektivere Trocknung des kondensierten Wassers W der Abkühlprozess verlangsamt und damit der Wirkungsgrad der Aufheizung durch den Dampf S erhöht. Es ergibt sich auf diese Weise eine Energieeinsparung.

Es können eine oder auch mehrere dynamische Pumpen P in einem Zylinder 11 angeordnet sein. Die dynamische Pumpe P kann auch für andere Fluide verwendet werden, in allen Bereichen, wo die beschleunigte Abfuhr eines Fluids erforderlich ist. Die dynamische Pumpe P kann auch an einer Drehverbindung als separates Bauteil angebracht oder als deren Teil in die Drehverbindung integriert sein. Eine dynamische Pumpe kann auch irgendwo in einer Rohrleitung integriert sein, wenn dort beispielsweise eine Beschleunigung eines Fluids oder eine Druckerhöhung angestrebt wird. Besonders gute Ergebnisse werden erhalten, wenn man mit multiplen dynamischen Pumpen arbeitet.

Nachfolgend wird unter Bezugnahme auf Figur 10 a ein weiteres Ausführungsbeispiel der vorliegenden Erfindung näher erläutert. Diese Variante der Erfindung zeigt ein Beispiel einer kontaktlosen rotierenden Dichtungsanordnung vom Sterntyp oder Spinnentyp, die sich insbesondere für Anwendungen eignet, bei denen als Fluid ein Öl, ein Thermalöl oder dergleichen verwendet wird. Die Drehverbindung ist eingesetzt bei einer Maschine mit rotierenden Bauteilen, bei der eine umlaufende Klammer 8 an dem Lagergehäuse der rotierenden Maschine 9 angebracht ist, so dass die Lager 16 nur das Gewicht der Welle 1 tragen müssen. Bei dieser Bauart haben die Lager 16 die Funktion, die Welle 1 sehr genau zu führen, so dass die thermische Expansion und die Neigung der Welle 19 der rotierenden Maschine keinen Einfluss auf die Welle 1 haben. Die Lager 16 können wie in der Zeichnung als Kugellager ausgebildet sein, es können aber auch Gleitlager sein.

In einer Standardbauart würden bei dieser rotierenden Dichtungsanordnung keine eigenen Lager verwendet, da die Welle 1 durch die Welle 19 fixiert würde, so dass die Lager des rotierenden Maschinenteils und die Welle 19 die Welle 1 der Drehverbindung drehen würden.

Außerdem ist hier Platz vorhanden für die dynamische Dichtung 2, wobei in den zuvor geschilderten Ausführungsbeispielen erreicht werden sollte, dass das Fluid von der Kammer A in die Kammer B strömt, so dass die Abdichtung an der Stelle der dynamischen Dichtung 2 erreicht wird und das Fluid nicht austreten (lecken) kann in den offenen Raum F.

Im Bereich der dynamischen Dichtung 2 kann der Spalt zwischen dem Gehäuse 3, der Welle 1 und dem Tragrohr 21 unterschiedlich groß sein, abhängig von dem Einsatzbereich der Maschine und abhängig davon, ob eine nur teilweise oder eine vollständige Abdichtung bezweckt wird. Im vorliegenden Ausführungsbeispiel gemäß Figur 10 a erfolgt keine vollständige Abdichtung, so dass man durch Vergrößerung des Zwischenraums in dem Spalt E erreichen kann, dass ein kleiner Anteil des Fluids in den Spalt E eintritt und von dort aus in den Raum L gelangt, so dass das Fluid durch die Lager 16 hindurchgeht, um diese zu schmieren und dann austritt in die Kammer B1. Das Gehäuse 3B hat eine oder mehrere Rohrleitungen 20, so dass das Fluid aus der Kammer B1 in die Kammer G eintreten kann.

Das primäre Fluid tritt durch den Einlass i ein und gelangt in die Kammer A1, die so genannte Beschleunigungskammer und strömt danach durch die Kammer M. Dies erzeugt einen Unterdruck in der Kammer G, wodurch dann das Fluid aus der Kammer G angesaugt wird, so dass sich in der Kammer B2 das primäre Fluid aus Kammer A1 mit dem rezirkulierten Fluid aus den Kammern L und B1 mischt. Aus der Kammer B2 strömt das Fluid durch die Öffnungen R, von denen eine oder mehrere vorhanden sein können, und gelangt in die Kammer A. Von der Kammer A und an der Stelle der dynamischen Dichtung 2 vorbei strömt das Fluid in die Kammer B.

Auf diese Weise wird eine Rezirkulation eines Anteils des Fluids erreicht, die genutzt wird für die Schmierung des Lagers 16, wobei dieses Fluid sich in einem ständig umlaufenden Strom befindet.

In dem Zwischenraum E und den Kammern L und B1 kann ein sehr niedriger Druck eingestellt werden, so dass die Rezirkulation möglich ist und so dass das Fluid auch nicht in den offenen Raum F austreten kann. Dies kann durch zwei Maßnahmen erfolgen, durch einfügen einer Labyrinthdichtung 6 a, oder durch einfügen einer Membrandichtung 7, einer Lippendichtung, einer Dichtungspackung oder eines anderen Dichtungstyps in die Kammer N.

In dem Ausführungsbeispiel gemäß Figur 10 a ist die Kammer B zwischen der Welle 1 und dem Tragrohr 21 ausgebildet. An der Stelle der dynamischen Dichtung 2 können die Kammern A und B geradlinig oder mit gekrümmten oder sphärischen Oberflächen ausgebildet sein. Das Tragrohr 21 hat auch die Funktion, das Siphonrohr 12 zu halten. Der in der Zeichnung dargestellte Beschleuniger Z kann als integraler Teil der Drehverbindung oder als separate Komponente ausgebildet sein, die später hinzugefügt wird. Für die Auswahl der jeweiligen Formen der Kammern As, B2, G und M, die sich im Bereich des Beschleunigers Z befinden, gelten die gleichen Angaben wie oben für die Kammern A und B angegeben.

Nachfolgend wird unter Bezugnahme auf Figur 10 ein weiteres Ausführungsbeispiel der vorliegenden Erfindung näher erläutert. Die Darstellung zeigt eine Drehverbindung/Drehdurchführung (engl. rotary joint), d.h. eine Dichtungsanordnung für Papiermaschinen und andere Anlagen mit rotierenden Bauteilen, bei denen als Medium Dampf, Wasser oder ein anderes Fluid verwendet wird. Von dem zuvor unter Bezugnahme auf Figur 10 a beschriebenen Ausführungsbeispiel unterscheidet sich dasjenige gemäß Figur 10 im Wesentlichen nur in der Art der Schmierung der Lager 16. Im Übrigen gelten für die Variante nach Figur 10 die vorangegangenen Ausführungen zu Figur 10 a.

Aus der Zeichnung Figur 10 ist ersichtlich, dass bei dieser Variante der Drehdurchführung das schmierende Fluid über eine andere Quelle unter Druck in die Öffnung P1 und durch das Rohr 22 gefördert wird. Auf diese Weise wird das schmierende Fluid wie beispielsweise Öl oder dergleichen zugeführt und nach dem Schmieren der Lager 16 wird es durch die Öffnung P 2 abgeführt. Aufgrund des vergrößerten Spalts in dem Raum E und an der Stelle der dynamischen Dichtung 2 wird eine Teil des Arbeitsfluids in den Raum E eintreten, wo der Druck niedrig eingestellt wird, wobei es dann von dort aus in die Kammer B3 und in das Rohr 20 geht. Der Spalt zwischen dem Gehäuse 3B und der Dichtung 15 ist sehr klein, so dass das Fluid aus der Kammer B3 nicht in den offenen Raum F austreten kann. Wenn es notwendig ist, kann eine Membrandichtung 7, eine Lippendichtung, eine Dichtungspackung oder irgendeine andere Dichtung in dem Zwischenraum N hinzugefügt werden.

Nachfolgend wird unter Bezugnahme auf Figur 11 ein weiteres Ausführungsbeispiel der vorliegenden Erfindung näher erläutert. Die zuvor auf Figur 10 bezogene Beschreibung gilt auch für das Beispiel nach Figur 11, mit der Ausnahme, dass bei Figur 11 zwei beschleunigende Konusse AC1 und AC2 verwendet werden. Es können auch mehrere Konusse eingesetzt werden, so dass das Fluid zweifach oder mehrfach beschleunigt wird.

In diesem Fall hat die Tragrohranordnung 21 selbst zwei Öffnungen 23, so dass ein Teil des Fluids durch diese Öffnungen 23 in die Beschleunigungskammer A2 geht. Von dort aus strömt das Fluid an der Stelle der dynamischen Dichtung 2A vorbei und tritt in die Kammer B4 ein. Die Kammern B und B4 sind über die Öffnungen 24 miteinander verbunden, so dass die Kammer B4 eine größere Fluidbeschleunigung aufweist als die Kammer B und dadurch hilft, an der Stelle der dynamischen Dichtung 2 besser abzudichten. Es ist wünschenswert, dass die Öffnungen 23 und die Öffnungen R eingestellt werden, in einer Weise, dass ein höherer Druck in den Öffnungen 23 herrscht. Dies hat den Effekt, dass der Druck in der Kammer A2 höher ist verglichen mit dem Druck in der Kammer A. Dieser Prozess kann auch umgekehrt ausgeführt werden.

Nachfolgend wird unter Bezugnahme auf Figur 12 ein weiteres Ausführungsbeispiel der vorliegenden Erfindung näher erläutert. Die zuvor auf Figur 11 bezogene Beschreibung gilt auch für das Beispiel nach Figur 12, mit der Ausnahme, dass bei Figur 12 zwei Einlässe i1 und i2 für Dampf mit unterschiedlichem Druck vorgesehen sind. Der Effekt ist der gleiche wie zuvor bei Figur 11 beschrieben wurde.

Bei den Ausführungsbeispielen gemäß den Figuren 10, 10a, 11 und 12 wird ein Kompensator verwendet, der die Aufgabe hat, alle radialen und axialen Abweichungen an der Welle 19 zu verhindern und eine präzise Drehung der Welle 1 zu ermöglichen. Bei der Variante gemäß Figur 13, die nachfolgend beschrieben wird, wird eine radiale Abweichung der Welle 19 oder eine Neigung der Welle 19 eliminiert, so dass der Ring 3H durch Verwendung einer Skalenvergleichseinrichtung 26 zentriert wird, während die Welle 19 rotiert. Nach der Zentrierung werden die Welle 1, ein Teil der Labyrinthdichtung 6 a, der Ring 3G und die Dichtung 27 montiert. Diese Dichtung 27 ist sphärisch wie die Kugel Q und nach dieser Maßnahme ist sichergestellt, dass die Welle 1 präzise rotiert.

Das Lagergehäuse 9 und die Linie 25 sind nicht senkrecht ausgerichtet zur Achse der Welle 19 und um dies zu überwinden, wird eine umlaufende Klammer 8 installiert sowie das Gehäuse 3C auf dem Gehäuse 9, wobei diese Bauteile in Beziehung stehen zu der Achse der Welle 19, die nicht senkrecht ist, während die Platte 3D in dem Gehäuse 3C Spiel hat und sich axial in diesem bewegen kann.

Die Platten 3D und 3E sind über die Kugelfläche miteinander verbunden, so dass die Platte 3E in irgendeiner Richtung rund um ihren Radius installiert werden kann. Danach sollte der Ring 3F dicht an den Ring 3G angelegt werden und gemeinsam mit der Platte 3E zentriert werden. Danach sollten die Schraubbolzen 28 fest angezogen werden und der Ring 3F sollte gegen den Ring 3l fest angezogen werden, so dass die Welle der rotierenden Maschine sich drehen kann und eine absolute Konzentrizität von Welle 19, Welle 1 und Labyrinthdichtung 6 a erreicht werden.

Aufgrund der thermischen Ausdehnung der Welle 19 ändert sich der Spalt in dem Raum E, aber dieser ist so ausgebildet, dass er diese Änderungen kompensiert. In der Zeichnung Figur 13 gibt es zudem zwei Konusse AC1 und AC2 zur Beschleunigung, jedoch können es auch mehrere sein, wie zuvor bereits bei Figur 11 beschrieben wurde.

Für die Ausführungsvariante gemäß Figur 14 gelten im Prinzip zunächst die Ausführungen, die oben bezüglich der Variante nach Figur 13 gemacht wurde, mit der Abweichung, dass das Siphonrohr 12 eine eigene Beschleunigungskammer A3 aufweist sowie eine weitere Kammer B5. Dadurch entsteht ein größeres Kammervolumen B, welches die Abdichtung weiter begünstigt. Da nun auch eine Beschleunigung des Fluids in dem Siphonrohr 12 auftritt, wird die primäre Abdichtung an der Stelle der dynamischen Dichtung 2 weiter verbessert.

Bei der Ausführungsvariante gemäß Figur 15 gelten wiederum die Ausführungen zu den zuvor beschriebenen Beispielen der Figuren 13 und 14, wobei in Figur 15 der Unterschied darin besteht, dass sich der Spalt E an einer anderen Stelle befindet und zu Beginn eine achsparallele Ausrichtung hat entgegen der Strömungsrichtung des Fluids von Kammer A nach Kammer B, wobei sich dann weiter nach außen hin ein etwa radialer Spalt anschließt.

Bei der Ausführungsvariante gemäß den Figuren 16 a und 16 gelten wiederum die Ausführungen zu den zuvor beschriebenen Beispielen. Diese Drehdurchführung kann für alle Typen von Fluiden verwendet werden und die Lager 16 können als Gleitlager ausgebildet sein, wie in Figur 16 dargestellt, aber es können auch andere Lagertypen verwendet werden. Wenn eine ideale rotierende Dichtung gewünscht ist, ist es vorteilhaft, eine Feder an der Außenseite der Dichtungsanordnung anzubringen, etwa in Nähe des Punkts 44, wobei diese Feder das Gewicht der Drehdurchführung durch die Kraft, die die Feder nach oben hin aufbringt, eliminiert.

Die Ausführungsvariante gemäß den drei Ansichten der Figur 16b ist ähnlich derjenigen gemäß Figur 16 a, die zuvor beschrieben wurde, mit der Maßgabe, dass bei Figur 16 b zusätzlich die weiteren Kammern B1 und A1 vorhanden sind sowie der weitere Spalt E1. In der Kammer B1, die stromabwärts der ersten Engstelle bei den Kammern A und B liegt, erweitert sich der innere Querschnitt der Hohlwelle 1 erneut kontinuierlich bis zu dem weiteren Spalt E1 hin, wobei sich danach der innere Querschnitt der Hohlwelle 1 in der sich stromabwärts zur Kammer B1 anschließenden weiteren Kammer A1 nach dem Spalt E1 wieder kontinuierlich verjüngt, so dass nach der Kammer A1 ein Innenquerschnitt gegeben ist, der entweder demjenigen nach der Kammer B entspricht oder sogar weiter ist als dieser. Auf diese Weise kann der Druck, der auf den Lagern 16 lastet, verringert werden. Bei dieser Variante der Erfindung ist also im Bereich der beiden Kammern A und B eine Engstelle in der Hohlwelle 1 vorhanden und im Bereich der beiden weiteren Kammern B1 und A1 ist eine Querschnittserweiterung vorhanden, die zu einer Verlangsamung der Strömungsgeschwindigkeit des Fluids führt.

Bei der Ausführungsvariante gemäß Figur 17 gelten wiederum die Ausführungen zu den zuvor beschriebenen Beispielen, wobei hier jedoch der Unterschied besteht, dass der Ring 34, der auch die Engstelle umfasst, aus Gummi oder einem anderen elastischen Material mit guten Gleiteigenschaften besteht. Bei dieser Variante einer rotierenden Dichtung ist der Ring 34 eine Komponente der Welle 1. Da ein Spalt in dem Zwischenraum E besteht zwischen den Ringen 33 und 34, erfolgt die Abdichtung an der Stelle der dynamischen Dichtung 2.

In den Fällen zuvor beschriebener Versionen, wie beispielsweise derjenigen gemäß Figur 6, bei denen eine Membrandichtung 7 verwendet wird, wird diese dann eingesetzt, wenn ein Ventil in der Leitung O geschlossen wird. Denn da die rotierende Maschine unter Druck steht und aufgrund des Spalts in dem Zwischenraum E, würde, wenn keine Membrandichtung 7 verwendet würde, das Fluid in den offenen Raum F austreten.

Bei der Variante gemäß Figur 17 besteht keine Notwendigkeit für eine Membrandichtung 7, denn wenn ein Ventil in der Leitung O geschlossen und die rotierende Maschine unter Druck stehen würde, würde sich der Gummiring 34 in der Kammer B nach links ausdehnen und käme mit dem Ring 33 in Berührung, so dass die Stelle der dynamischen Dichtung 2 abgedichtet würde. Dies könnte auch dann erfolgen, wenn der Ring 34 nicht aus Gummi bestehen würde, da dieser so ausgebildet werden könnte, dass er unter Druck in der Zeichnung nach links gleitet und durch Berührung mit dem Ring 33 eine Abdichtung erreicht wird. Die Öffnung 35 dient zur Drainage in dem Fall, dass die dynamische Dichtung leckt, so dass das Fluid nicht mit den Lagern 16 in Kontakt kommt. Auch können die Ringe 33 und 34 so montiert werden, dass sie ständig in gleitendem Kontakt miteinander sind.

Nachfolgend wird unter Bezugnahme auf Figur 18 ein weiteres Ausführungsbeispiel der vorliegenden Erfindung näher erläutert. Alle obigen Ausführungen zu den vorhergehenden Beispielen gelten im Prinzip auch für die Variante von Figur 18. Diese rotierende Dichtung ist für Maschinen vorgesehen, die mit hoher Geschwindigkeit arbeiten und wird in der Regel vertikal auf der Maschine installiert. Die Öffnung 39 dient zur Drainage.

Nachfolgend wird unter Bezugnahme auf Figur 19 ein weiteres Ausführungsbeispiel der vorliegenden Erfindung näher erläutert. Alle obigen Ausführungen zu dem vorhergehenden Beispiel von Figur 18 gelten im Prinzip auch für die Variante von Figur 19, wobei hier jedoch die rotierende Dichtung keine eigenen Lager hat, sondern die Lager der rotierenden Maschine selbst nutzt. Wie in Figur 19 erkennbar ist, ist die Welle 19 gleichzeitig die Welle der rotierenden Maschine und das Gehäuse 40 ist das Gehäuse der rotierenden Maschine.

Nachfolgend wird unter Bezugnahme auf die Figur 20 ein weiteres Ausführungsbeispiel der vorliegenden Erfindung erläutert. In Figur 20 ist eine rotierende Dichtung dargestellt, die zwei verschiedene Methoden der Abdichtung kombiniert. Diese Methoden sind in der Zeichnung als Zone 1 und Zone 2 gekennzeichnet.

Zone 1 stellt eine Dichtung an der äußeren Seite der Welle dar, wobei die Abdichtung erzielt wird an der Stelle der dynamischen Dichtung 2. Das Hauptprinzip der Dichtung ist bei Figur 1 beschrieben. Zone 2 stellt eine Abdichtung an der inneren Seite der Welle dar, wobei diese Abdichtung an der Stelle der dynamischen Dichtung 2C erreicht wird. Das Hauptprinzip dieser Dichtung ist in den Figuren 3-19 beschrieben.

In der Zeichnung Figur 20 liegt die gleiche Methode der Schmierung der Lager 16 vor wie dies zuvor bei der Zeichnung Nr. 10 a beschrieben wurde. Die Öffnungen 37 und 38 sind Drainageöffnungen, so dass im Falle eines Lecks das Fluid in das System zurückströmen kann.

Nachfolgend wird unter Bezugnahme auf Figur 21 ein weiteres Ausführungsbeispiel der vorliegenden Erfindung näher erläutert. Alle obigen Ausführungen zu dem vorhergehenden Beispiel von Figur 20 gelten im Prinzip auch für die Variante von Figur 21, mit dem Unterschied, dass hier zwei Lippendichtungen 42 zwischen den Kammern A4 und B6 hinzugefügt wurde. In der Zeichnung Figur 21 liegt die gleiche Methode der Schmierung der Lager 16 vor wie zuvor Bezug nehmend auf Figur 10 a beschrieben wurde.

Nachfolgend wird unter Bezugnahme auf Figur 22 ein weiteres Ausführungsbeispiel der vorliegenden Erfindung näher erläutert. Alle obigen Ausführungen zu den vorhergehenden Beispielen der Figuren 20 und 21 gelten im Prinzip auch für die Variante von Figur 22, mit dem Unterschied, dass bei Figur 22 beide Zonen 1 und 2 eine Abdichtung von der inneren Seite der Welle darstellen.

Nachfolgend wird unter Bezugnahme auf Figur 23 ein weiteres Ausführungsbeispiel der vorliegenden Erfindung näher erläutert. Alle obigen Ausführungen zu den vorhergehenden Beispielen gelten im Prinzip auch für die Variante von Figur 23, insbesondere die Ausführungen zu Figur 14, da es sich bei Figur 23 um eine Ergänzung zu Figur 14 handelt. Bei dieser Ergänzung geht es um die Erweiterung der Kammer B mit dem Unterschied, dass bei Figur 14 diese Erweiterung über das Siphonrohr 12 durchgeführt wurde, während in Figur 23 dies über die Form der Welle 1 geschieht. Hierdurch ergibt sich eine Erweiterung der Kammer B nach radial außen, während in Figur 14 die Kammer B nach radial innen erweitert wurde.

Nachfolgend wird unter Bezugnahme auf Figur 24 ein weiteres Ausführungsbeispiel der vorliegenden Erfindung näher erläutert. Alle obigen Ausführungen zu den vorhergehenden Beispielen gelten im Prinzip auch für die Variante von Figur 24. Diese Variante zeigt eine klassische rotierende Dichtung (Drehgelenkverbindung, rotary joint), bei der die Abdichtung erzielt wird durch den Kontakt aufeinander gleitender Flächen 43, 44 und 45. Es wurden hier die Bauteile 46 und 47 hinzugefügt, so dass sich eine Kombination aus einer klassischen und einer dynamischen Abdichtung ergibt. Durch die Vergrößerung des Spalts E gelingt es, einen Anteil des Fluids umzulenken und in den Raum Q zu drücken. Dies führt zu einer wesentlichen Senkung der Drucklast auf den gleitenden Flächen, da der Druck in dem Raum Q viel niedriger sein wird als der Arbeitsdruck und daher die Lebensdauer der Dichtflächen verlängert wird.

Dies könnte auch auf andere Weise erzielt werden, wenn das Bauteil 47 entfernt würde. Es ergäbe sich dann ein höherer Druck in dem Raum Q, aber dieser Druck würde immer noch sehr viel geringer sein als der Arbeitsdruck des Fluids.

Nachfolgend wird erneut auf Figur 16 a Bezug genommen, die ein weiteres Ausführungsbeispiel der vorliegenden Erfindung zeigt. Es gelten zunächst alle obigen Ausführungen zu der Variante von Figur 16 auch für die Ausführungsform gemäß Figur 16 a, wobei jedoch bei Figur 16 das Gewicht der rotierenden Dichtungsanordnung von der Welle 1 aufgenommen wurde. Bei Figur 16 a sind die Stangen 49 an der rotierenden Maschine an einem anderen stationären Teil angebracht. Die Schultern 48 sind Teil des Gehäuses 3, so dass das Gewicht der rotierenden Dichtungsanordnung von den Stangen 49 getragen wird, die durch die Öffnungen an den Schultern 48 hindurch gehen. Dadurch wird die Last vollständig von der Welle 1 genommen. In der Zeichnung Figur 16 a ist ein Kompensator 50 vorgesehen, der zwischen den beiden Wellen 1 und 1 A angeordnet ist. Die Welle 1 A ist an der rotierenden Maschine befestigt und die Aufgabe des Kompensators besteht darin, die radialen und die axialen Neigungen zwischen den Achsen der rotierenden Maschine und dem Gehäuse der rotierenden Dichtungsanordnung zu kompensieren.

Nachfolgend wird unter Bezugnahme auf die Figur 25 ein weiteres Ausführungsbeispiel der vorliegenden Erfindung erläutert. Alle obigen Ausführungen zu den Beispielen gemäß den Figuren 9, 10, 11 und 12 gelten auch für die Variante von Figur 25. Die rotierende Einheit in Figur 25 wird synchronisiert und ist schwimmend (schwebend). Die Kammern A und B sind so ausgeführt wie zuvor beschrieben, ebenso wie die Stelle der dynamischen Dichtung 2 und des Zwischenraums E. Die Welle 1 B besteht entweder aus einem leichten Material oder aus Zinn, oder aus einem Hohlkörper, so dass diese abschnittsweise, zum Beispiel im Bereich des Raums 52 hohl ist.

Auf diese Weise wird erreicht, dass die Welle 1 B sehr leicht ist und keine eigenen Lager ha, da das Fluid in der Kammer B die schwimmende Welle zentriert, die sich automatisch selbst positioniert.

Die Welle der rotierenden Maschine 19 kann Neigungen aufweisen, axiale oder radiale Abweichungen. Die Wellen 1A und 19 sind miteinander verbunden und sie können sich in alle Richtungen bewegen, aber der Kompensator 50 absorbiert Bewegungen, so dass die Welle 1 B weiterhin schwimmt und in Zentrizität zu der Welle der Maschine verbleibt und zu der Welle der rotierenden Einheit.

Das kleine Lager 51 hat die Aufgabe, die Welle 1 B zu halten, für den Fall, dass die Maschine angehalten wird, so dass die Welle nicht nach unten fallen kann. Auch ist das Lager 51 dazu da, die axialen Kräfte der Welle 1 B zu absorbieren. Dies ist deshalb so, weil nun ein größerer Spalt in dem Zwischenraum E besteht, welcher das Auftreten leichter axialer Kräfte verursacht.

Nachfolgend wird unter Bezugnahme auf die Figur 26 ein weiteres Ausführungsbeispiel der vorliegenden Erfindung erläutert. Alle obigen Ausführungen zu dem Beispiel gemäß der Figur 25 gelten auch für die Variante von Figur 26, mit der Ausnahme, dass in der Zeichnung Figur 26 das Ende der Welle 1b eine oder mehrere zusätzliche Flächen 53 aufweist, wobei diese Flächen 53 unterschiedliche Formen und Größen haben können.

Die Funktion dieser Flächen 53 ist es, zu ermöglichen, dass das Fluid diese Flächen 53 in Richtung des Fluidstroms drückt. Ziel ist es, die axiale Kraft, die in dem Zwischenraum E1 auftritt, zu eliminieren, da nun das Fluid aus der Kammer B die Welle 1b nach rechts oder in Richtung auf den Fluidstrom drückt, das heißt in entgegengesetzter Richtung zu dem Vektor der axialen Kraft vom Zwischenraum E1 auf die Welle 1 b. Dadurch werden alle axialen Kräfte eliminiert.

In den vorhergehenden Ausführungen zu den Ausführungsbeispielen hatten die Kammern A und B glatte Seiten oder Wände. In manchen Fällen können diese aber auch mit beispielsweise spiralförmigen Nuten versehen werden, die eine bessere Ausrichtung des Fluidstroms unterstützen und daher eine bessere Abdichtung an der Stelle der dynamischen Dichtung 2 erreichen.

Für alle oben genannten Ausführungsbeispiele gilt, dass die dort gezeigten konstruktiven Varianten auch ganz oder in Teilen miteinander kombiniert werden können, ohne, dass es diesbezüglich Einschränkungen gibt.

### Bezugszeichenliste

A erste Kammer
A1 weitere Kammer
A2 Beschleunigungskammer
A3 Beschleunigungskammer
A4 Kammer
AC1 Konus
AC2 Konus
B zweite Kammer
B1 weitere Kammer
B2 Kammer
B3 Kammer
B4 Kammer
B5 weitere Kammer
B6 Kammer
C dritte Kammer
3C Gehäuse
C₁ abgeschrägte Wandbereiche
C₂ stirnseitige Wand
3D Platte
E Zwischenraum, Spalt
E1 Zwischenraum, Spalt
3E Platte
F offener Raum
3F Ring
G Kammer
3G Ring
H innere Kammer
3H Ring
i Einlass
i1 Einlass
i2 Einlass
L Kammer
M Kammer, Engstelle
N Raum, Kammer
P Pumpe
P1 Öffnung
P2 Öffnung
Q Raum
R Öffnung
S Dampf
W Wasser
1 Hohlwelle
1b Welle
2 dynamische Dichtung
2A dynamische Dichtung, Engstelle
2C dynamische Dichtung
3 Gehäuse
3B Gehäuse
4 Gehäuse
5 Lager
6 Öffnungen, Kanäle
6 a Labyrinthdichtung
7 Membrandichtung
8 spinnenartige Auslegerarme
8 Klammer
9 Lagergehäuse
11 Zylinder einer Papiermaschine
12 Rohr, Rohrleitung, Siphonrohr
13 Drehverbindung
14 Gehäuse der dynamischen Pumpe
14 a Gehäuse der dynamischen Pumpe
14 Kompensator
15 Dichtung
16 Lager
19 Welle
20 Rohrleitung
21 Tragrohr
22 Rohr
23 Öffnungen
24 Öffnungen
25 Linie
26 Skalenvergleichseinrichtung
27 Dichtung
33 Ring
34 Ring
35 Öffnung
37 Öffnung
38 Öffnung
39 Öffnung
40 Gehäuse
42 Lippendichtungen
43, 44, 45 aufeinander gleitende Flächen
44 Punkt der Anbringung einer Feder
46, 47 hinzugefügte Bauteile
48 Schulter
49 Stangen
50 Kompensator
51 kleines Lager
52 Raum, Hohlraum
53 Flächen

## Patentansprüche

1. Vorrichtung umfassend mindestens ein stationäres Gehäusebauteil, eine gegenüber dem stationären Gehäusebauteil rotierende Hohlwelle sowie mindestens eine Dichtungsanordnung zur Abdichtung gegen den Eintritt oder Austritt eines Fluids, die in einem Bereich zwischen der rotierenden Hohlwelle und dem stationären Gehäusebauteil angeordnet ist, wobei die Abdichtung mittels eines strömenden Fluids erfolgt und dazu mindestens eine von dem Fluid durchströmte erste Kammer (A) vorgesehen ist, mindestens eine zweite Kammer (B) stromabwärts der ersten Kammer (A) und mindestens eine Engstelle im Strömungsweg zwischen erster und zweiter Kammer, an der das Fluid eine Beschleunigung erfährt, wobei mindestens ein Spalt oder Zwischenraum (E) zwischen der rotierenden Hohlwelle (1) und dem mindestens einen stationären Gehäusebauteil (3) abgedichtet wird, welcher sich im Bereich der Engstelle befindet, **dadurch gekennzeichnet, dass** sich die erste Kammer (A) in Strömungsrichtung des Fluids vor der Engstelle im Querschnitt kontinuierlich verjüngt und dass sich die zweite Kammer (B) in Strömungsrichtung des Fluids nach der Engstelle im Querschnitt kontinuierlich erweitert.

2. Vorrichtung nach Anspruch 1, **dadurch gekennzeichnet, dass** sich an die Engstelle stromabwärts, vorzugsweise stromabwärts an die zweite Kammer B, eine dritte Kammer C anschließt, in der eine Richtungsumkehr des Fluids erfolgt, so dass dieses im Gegenstrom zur Richtung des Stroms in der zweiten Kammer (B) aus der Anordnung ausströmt.

3. Vorrichtung nach einem der Ansprüche 1 oder 2, **dadurch gekennzeichnet, dass** die dynamische Abdichtung mittels eines strömenden Fluids mit einer Labyrinthdichtung (6 a) kombiniert wird, welche im Bereich des Spalts oder Zwischenraums (E) angeordnet ist.

4. Vorrichtung nach einem der Ansprüche 1 bis 3, **dadurch gekennzeichnet, dass** mindestens eine Öffnung oder ein Kanal (6) im Bereich des abzudichtenden Spalts oder Zwischenraums (E) vorgesehen ist, durch die Fluid mindestens abschnittsweise in radialer Richtung oder in einem spitzen Winkel zur Strömungsrichtung in den Kammern (A) und (B) von außerhalb der Hohlwelle (1) einströmt.

5. Vorrichtung nach einem der Ansprüche 1 bis 4, **dadurch gekennzeichnet, dass** innerhalb der Hohlwelle (1) konzentrisch zu dieser, sich in axialer Richtung erstreckend, eine Rohrleitung (12) angeordnet ist, durch die ein Fluid strömt, wobei das Fluid durch die Rohrleitung (12) bevorzugt im Gegenstrom zu der Fluidströmung durch die Hohlwelle (1) strömt.

6. Vorrichtung nach einem der Ansprüche 1 bis 5, **dadurch gekennzeichnet, dass** zur Abdichtung des mindestens einen Spalts oder Zwischenraums (E) zwischen der rotierenden Hohlwelle (1) und dem mindestens einen stationären Gehäusebauteil (3) weiterhin mindestens eine Membrandichtung (7) vorgesehen ist, welche vorzugsweise von den Kammern (A und (B) aus gesehen radial außen in dem Spalt oder Zwischenraum (E) abdichtet.

7. Vorrichtung nach einem der Ansprüche 1 bis 6, **dadurch gekennzeichnet, dass** mindestens ein Teilabschnitt (34) der Hohlwelle (1) aus einem elastischen Material besteht, so dass bei einem höheren Relativdruck des Fluids im Inneren der Hohlwelle (1) durch eine Verformung des elastischen Materials des Teilabschnitts (34) der Spalt (E) sich schließt.

8. Vorrichtung nach einem der Ansprüche 1 bis 8, **dadurch gekennzeichnet, dass** der Bereich, in dem sich die erste Kammer A befindet, ein zu dem stationären Gehäusebauteil (3) separates Bauteil ist, welches über eine Schraubverbindung mit dem Gehäusebauteil (3) verbunden ist.

9. Vorrichtung nach Anspruch 9, **dadurch gekennzeichnet, dass** das stationäre Gehäusebauteil (3) der Drehverbindung mittelbar oder unmittelbar über bevorzugt spinnenartige Auslegerarme (8) mit einem Lagergehäuse (9) einer Maschine verbunden ist.

10. Vorrichtung nach einem der Ansprüche 1 bis 10, **dadurch gekennzeichnet, dass** das Fluid über einen im wesentlichen radialen Zugang in das stationäre Gehäusebauteil (3) eintritt und danach in eine im wesentlichen axiale Strömung durch die Kammern (A) und (B) und/oder durch die Hohlwelle (1) umgelenkt wird.

11. Vorrichtung nach einem der Ansprüche 1 bis 11, **dadurch gekennzeichnet, dass** das Fluid nach Durchströmen der Kammern (A) und (B) und/oder der Hohlwelle (1) und/oder der Rohrleitung (12) durch einen im wesentlichen radialen Ausgang aus dem stationären Gehäusebauteil (3, 4) austritt.

12. Vorrichtung nach einem der Ansprüche 6 bis 12, **dadurch gekennzeichnet, dass** an die Rohrleitung (12) endseitig eine Pumpvorrichtung (14, 14 a) angeschlossen ist, über welche ein Fluid in die Rohrleitung angesaugt und über diese abgeführt wird.

13. Vorrichtung nach Anspruch 13, **dadurch gekennzeichnet, dass** die Pumpvorrichtung als Treibmittelpumpe ausgebildet ist, wobei vorzugsweise ein Fluid, welches durch die Hohlwelle (1) strömt als Treibmittel dient.

14. Vorrichtung nach einem der Ansprüche 1 bis 13, **dadurch gekennzeichnet, dass** der Spalt oder Zwischenraum (E) für einen Teilstrom des Fluids durchlässig ist, wobei gegebenenfalls stromabwärts des Spalts (E) ein Lager (16) angeordnet ist, welches der Teilstrom des Fluids durchströmt, wobei wiederum stromabwärts zu dem Spalt (E) und/oder zu dem Lager sich wenigstens eine Rohrleitung (20) anschließt, die zu einer Kammer (G) führt, die im Bereich einer weiteren Engstelle (M) zwischen zwei Kammern (A1, B2) angeordnet ist, zwischen denen ein primärer Fluidstrom eine Beschleunigung erfährt, so dass sich der Teilstrom des Fluids mit dem primären Fluidstrom vermischt, wobei die Kammer (B2) stromabwärts über Kanäle, Leitungen und/oder weitere Kammern in Strömungsverbindung steht mit dem Inneren der Hohlwelle (1), so dass der vereinigte Fluidstrom in die Hohlwelle (1) in den Bereich der dynamischen Dichtung (2), in dem sich der Spalt (E) befindet, zurückführbar ist.

15. Vorrichtung nach einem der Ansprüche 1 bis 14, **dadurch gekennzeichnet, dass** konzentrisch in der Hohlwelle (1) eine Rohrleitung (21) aufgenommen ist, welche wiederum konzentrisch eine weitere Rohrleitung (12) aufnimmt, wobei das Innere der Hohlwelle (1) mit dem Inneren der Rohrleitung (21) in Fluidverbindung steht und wobei in der Rohrleitung (21) zwischen zwei Kammern (A2, B4) wenigstens eine weitere Engstelle angeordnet ist, an der das Fluid eine Beschleunigung erfährt, wobei gegebenenfalls das Innere der Hohlwelle (1) und das Innere der Rohrleitung (21) stromaufwärts jeweils separate Einlässe (i1, i2) für Fluide aufweisen, die unter unterschiedlichen Drücken stehen.

16. Vorrichtung nach einem der Ansprüche 5 bis 15, **dadurch gekennzeichnet, dass** in der konzentrisch innerhalb der Hohlwelle (1) liegenden Rohrleitung zwischen zwei Kammern (A3, B6) wenigstens eine weitere Engstelle (2C) angeordnet ist, an der das Fluid eine Beschleunigung erfährt und ein Spalt nach außen hin abgedichtet wird, wobei dort gegebenenfalls austretendes Fluid über Öffnungen (37, 38) im Gehäuse und Leitungen zu der ersten Kammer (A) und der Engstelle im Bereich des Spalts (E) zwischen Hohlwelle (1) und Gehäuse (3) zurückführbar ist.

17. Vorrichtung nach einem der Ansprüche 1 bis 16, **dadurch gekennzeichnet, dass** sich der innere Querschnitt der Hohlwelle (1) stromabwärts der im Querschnitt erweiterten zweiten Kammer (B) wieder verjüngt, wobei sich vorzugsweise stromabwärts an diese Verjüngung wieder ein Abschnitt der Hohlwelle mit gleichbleibendem Querschnitt anschließt.

18. Vorrichtung nach einem der Ansprüche 1 bis 17, **dadurch gekennzeichnet, dass** die Hohlwelle (1b) aus einem Werkstoff mit geringem Gewicht, insbesondere aus Leichtmetall oder Zinn besteht oder mindestens abschnittsweise (52) aus einem hohlen Material besteht.
